# EUROPÄISCHE PATENTSCHRIFT

(11) **EP 3 386 356 B1**
(45) Veröffentlichungstag und Bekanntmachung des Hinweises auf die Patenterteilung: **08.07.2020**
(21) Anmeldenummer: 16819448.8
(22) Anmeldetag: 09.12.2016
(51) Int. Cl.: A47J 31/60

(54) **VORRICHTUNG UND VERFAHREN ZUR REINIGUNG VON ESPRESSOMASCHINEN**
DEVICE AND METHOD FOR CLEANING ESPRESSO MACHINES
DISPOSITIF ET PROCÉDÉ DE NETTOYAGE DE MACHINES À EXPRESSO

(30) Priorität: 10.12.2015 DE 102015224861; 24.06.2016 DE 102016211375
(43) Veröffentlichungstag der Anmeldung: 17.10.2018
(73) Patentinhaber: Senger, Alexander, 9000 St. Gallen (CH)
(72) Erfinder: Senger, Alexander, 9000 St. Gallen (CH)
(74) Vertreter: Ramrath, Lukas
(86) Internationale Anmeldenummer: PCT/EP2016/080457
(87) Internationale Veröffentlichungsnummer: WO 2017/097988

(56) Entgegenhaltungen:
- WO-A1-2005/104916
- DE-A1-102008 029 366
- IT-B- 1 235 949
- US-A- 3 824 913

## Beschreibung

Die Erfindung betrifft eine Vorrichtung und ein Verfahren zur Reinigung von Espressomaschinen.

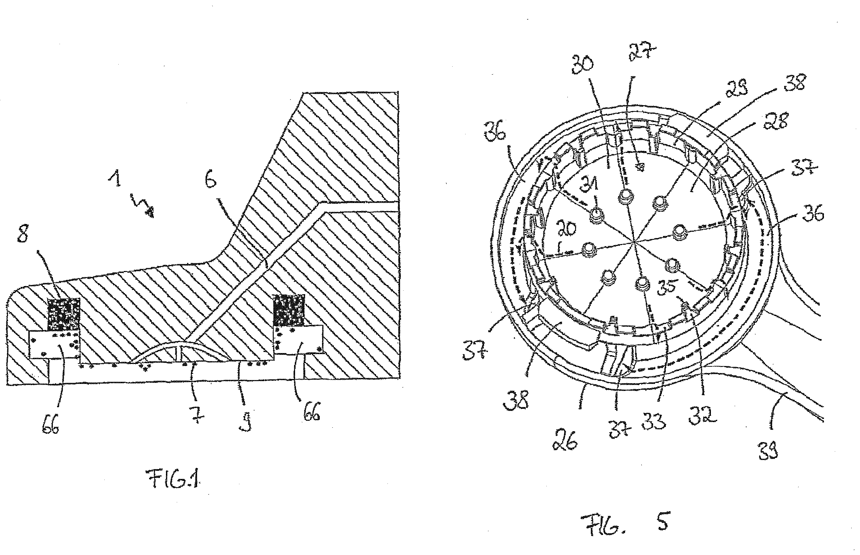

Sogenannte Siebträger-Espressomaschinen sind weit verbreitet und werden in großen Stückzahlen verkauft. So wird das Jahresproduktionsvolumen in Europa auf ca. 190.000 Stück geschätzt. Fig. 1 zeigt einen schematischen Querschnitt durch eine Brühgruppe 1, wobei anhaftende Kaffeereste 7 exemplarisch dargestellt sind. Es ist dargestellt, dass Kaffeereste 7 an einer Unterseite und äußeren Mantelflächen einer so genannten Dusche 9 der Brühgruppe als auch im an einer Dichtung 8 haften können.

Diese Verschmutzung durch anhaftende Kaffeereste 7 kann bereits nach einer verhältnismäßig geringen Anzahl von Brühvorgängen auftreten. Aufgrund von Oxidation und biologischen Abbauprozessen der Kaffeereste 7 im feuchten und warmen Pulver kann es dann zu deutlichen Beeinträchtigungen des Kaffeegeschmackes kommen. Weiterhin wirkt verbleibendes Kaffeepulver abrasiv auf eine Dichtung 8 zwischen dem Siebträger 4 und der Brühgruppe 1 und kann deren Verschleiß bewirken. Daher ist eine regelmäßige Reinigung, insbesondere eine tägliche Reinigung, der Brühgruppe wünschenswert. Bekannt sind Lösungen, bei der die Brühgruppe bei laufendem Wasser mit einem Pinsel ausgebürstet wird. Aufgrund der verwinkelten Ausbildung der Brühgruppe und gegebenenfalls hohen Wassertemperaturen kann dies ein für den Nutzer gefährlicher Prozess sein, der oft nur zu einer mangelhaften Reinigung führt.

Zum Einspannen des Siebträgers weist die Brühgruppe 1 eine Nut 66 für Siebträgernocken auf (Siebträgernut 66). Die Siebträgernocken können hierbei von unten in diese Siebträgernut 66 eingesetzt werden. Die Siebträgernut 66 ermöglicht hierbei das Einspannen des Siebträgers. Es ist möglich, dass Kaffeereste 7 auch in dieser Siebträgernut 66 haften können. Daher ist es auch wünschenswert, diese Siebträgernut 66 zu reinigen. Weiter dargestellt ist ein Wasserzulaufkanal 6, durch den heißes Wasser mit einem Druck von 8 bar bis 10 bar in die Brühgruppe 1 einströmt.

Die US 7,594,292 B1 beschreibt eine Vorrichtung zur Reinigung einer Espressomaschine mit einem Bürstenkopf, der an einem Bürstenhals angeordnet ist. Weiter ist der Bürstenhals an einem Handhabungsabschnitt angeordnet.

Die IT 1235949 B beschreibt eine elektrisch betriebene Bürste mit Borsten, wobei die Borsten verschiedene Höhen aufweisen. Die Borsten stehen hierbei von einer Oberfläche eines rotierbaren Teils ab.

Die WO 2014/053181 A1 offenbart eine Reinigungsmembran zum Abdichten eines Durchflusspfades eines Siebhalters zum Reinigen einer Kaffeemaschine. Die KR 20120003242 sowie die KR 2012003172 U offenbaren Reinigungsvorrichtungen, die ähnlich einem Siebträger ausgebildet sind und Borsten aufweisen. Die Borsten stehen hierbei von nach oben orientierten Oberflächen einer gestuften Oberfläche nach oben ab.

Die US 3,824,913 A offenbart Verbesserungen von Brüheinrichtungen, insbesondere eine verbesserte Einzeltassen-Kaffeebrüheinrichtung.

Die WO 2005/104916 A1 offenbart eine Reinigungsvorrichtung für ein Mahlwerk.

Die DE 10 2008 029 336 A1 offenbart ein Deformationsbauteil für ein Kraftfahrzeug.

Es stellt sich das technische Problem, ein Verfahren und eine Vorrichtung zur Reinigung von Espressomaschinen zu schaffen, die eine gründliche und zuverlässige Reinigung mit einfacher Handhabbarkeit ermöglichen, insbesondere eine gründliche und zuverlässige Reinigung der Nut für Siebträgernocken. Diese Lösung des technischen Problems ergibt sich durch die Gegenstände mit den Merkmalen der Ansprüche 1 und 15. Weitere vorteilhafte Ausgestaltungen der Erfindung ergeben sich aus den Unteransprüchen.

Vorgeschlagen wird eine Vorrichtung zur Reinigung von Espressomaschinen. Die Vorrichtung kann zur Reinigung wie ein Siebträger in eine Brühgruppe einer Espressomaschine eingesetzt werden. Insbesondere dient die Vorrichtung einer Reinigung einer Unterseite und Mantelflächen einer so genannten Dusche der Espressomaschine und/oder zur Reinigung der Siebträgernut.

Die Vorrichtung umfasst erfindungsgemäß mindestens ein ring- oder hohlzylinderförmiges Borstenträgerelement. Wie nachfolgend noch näher erläutert, kann das Borstenträgerelement insbesondere ein becherförmiges Element sein. Ein ringförmiges Borstenelement kann einen geschlossenen Randverlauf aufweisen. Somit umfasst der Begriff ringförmiges Borstenelement auch polygonale, z.B. oktagonale, ringförmige Borstenelemente oder ovale Borstenelemente.

Das Borstenträgerelement kann zumindest teilweise aus einem elastischen Material bestehen. Weiter kann das Borstenträgerelement eine zentrale Längsachse aufweisen, die z.B. einer zentralen Symmetrieachse des Ringes oder des Hohlzylinders entsprechen kann. Weiter kann ein ring- oder hohlzylinderförmiges Borstenträgerelement an oder zu einer oder beiden Stirnseiten hin geöffnet sein. Ein Durchmesser des Borstenträgerelements kann größer als ein Durchmesser der Dusche der Brühgruppe der zu reinigenden Espressomaschine sein, insbesondere 5 mm bis 10 mm größer. Ein Innendurchmesser des Borstenträgerelements kann z.B. in einem Bereich von 60 mm bis 65 mm liegen.

Dass das Borstenträgerelement ring- oder hohlzylinderförmig ist, umfasst auch den Fall, dass das Borstenträgerelement im Wesentlichen ring- oder hohlzylinderförmig ausgebildet ist. Dies kann bedeuten, dass das Borstenträgerelement nicht exakt ring- oder hohlzylinderförmig ausgebildet ist, insbesondere aufgrund von Ausnehmungen oder Ausbuchtungen z.B. im Bereich der Mantelfläche oder Stirnfläche(n).

Weiter erfindungsgemäß ist an einer Stirnfläche oder an einer Mantelfläche, vorzugsweise einer äußeren Mantelfläche, des Borstenträgerelements mindestens ein Nut-Borstenelement zur Reinigung einer Siebträgernut der Espressomaschine angeordnet. Die Siebträgernut ist hierbei insbesondere in der Brühgruppe der Espressomaschine angeordnet. Das mindestens eine Nut-Borstenelement steht hierbei von der Stirnfläche oder Mantelfläche ab. Dies kann bedeuten, dass das Nut-Borstenelement sich von der Stirnfläche oder Mantelfläche weg erstreckt. Dass das mindestens eine Nut-Borstenelement zur Reinigung der Siebträgernut dient, schließt nicht aus, dass mittels des Nut-Borstenelements weitere Elemente der Espressomaschine, insbesondere eine Oberfläche einer Dichtung und einer Außenseite einer Dusche der Espressomaschine gereinigt werden können.

Weiter steht zumindest ein Teilabschnitt des mindestens einen Nut-Borstenelements in Radialrichtung von der Stirnfläche oder Mantelfläche ab. Die Radialrichtung kann sich hierbei auf das Borstenträgerelement beziehen, wobei die Radialrichtung von der zentralen Längsachse des Borstenträgerelements nach außen orientiert sein kann. Mit anderen Worten steht das Nut-Borstenelement nicht ausschließlich in bzw. parallel zur Axialrichtung der zentralen Längsachse von der Stirn- oder Mantelfläche des Borstenträgerelements ab.

Insbesondere steht der zumindest eine Teilabschnitt in Radialrichtung nach außen ab. Es ist möglich, dass ein weiterer Teilabschnitt des mindestens einen Nut-Borstenelements in Axialrichtung von der Stirnfläche oder Mantelfläche, insbesondere also nach oben, absteht. Somit kann das Nut-Borstenelement von der Stirnfläche oder Mantelfläche nach oben und nach außen abstehen.

Richtungsangaben wie "oben" und "unten" können sich hierbei auf eine Richtung parallel zu einer zentralen Symmetrieachse der Dusche der Brühgruppe der zu reinigenden Espressomaschine beziehen, wobei ein Siebträger bzw. das Borstenträgerelement von unten nach oben in die Brühgruppe eingesetzt wird.

Somit kann zumindest ein Teil des Nut-Borstenelements in Radialrichtung nach außen geknickt oder gekrümmt sein. Beispielsweise kann also der in Radialrichtung abstehende Teilabschnitt insbesondere ein geknickter oder gekrümmter Abschnitt sein. Dies kann bedeuten, dass ein Richtungsvektor einer Orientierung einer zentralen Mittellinie eines Nut-Borstenelements in zumindest einem Punkt oder einem Abschnitt der Mittellinie einen Anteil aufweist, der parallel zu einer Radiallinie orientiert ist, die sich in einer Ebene senkrecht zur zentralen Längsachse von der zentralen Längsachse durch den Punkt/Abschnitt erstreckt, wobei dieser Anteil des Richtungsvektors zusätzlich von der zentralen Längsachse weg orientiert ist.

Weiter kann das Merkmal, dass zumindest ein Teilabschnitt des mindestens einen Nut-Borstenelements in Radialrichtung absteht, bedeuten, dass sich das Nut-Borstenelement zumindest in diesem Teilabschnitt von der Stirnfläche oder Mantelfläche in Radialrichtung, insbesondere nach außen, wegerstreckt. Es ist selbstverständlich auch möglich, dass das gesamte Borstenelement und nicht nur ein Teilabschnitt des Borstenelements in Radialrichtung absteht. Alternativ oder kumulativ ist zumindest ein Teilabschnitt des Nut-Borstenelements konkav gekrümmt. Die konkave Krümmung, also eine Krümmung nach innen, kann hierbei eine Krümmung von der Stirnfläche oder Mantelfläche des Borstenträgerelements hin zur zentralen Längsachse des Borstenträgerelements bezeichnen. Somit kann ein Teilabschnitt eine hin zur zentralen Längsachse des Borstenträgerelements gekrümmte Oberfläche aufweisen oder ausbilden. Im eingesetzten Zustand des Borstenträgerelements in die Brühgruppe kann der konkav gekrümmte Teilabschnitt hin zu einer Mantelfläche der Dusche der Brühgruppe gekrümmt sein. Somit kann das Nut-Borstenelement auch einen nach innen gekrümmten oder geknickten Teilabschnitt aufweisen. Die Krümmung kann sich hierbei insbesondere bezüglich einer Ebene ergeben, in der ein äußerster Randpunkt des Nut-Borstenelements und der oder die Kontaktabschnitt(e) oder -punkt(e) des Nut-Borstenelements mit dem Borstenträgerelement angeordnet sind. Auch ist eine Ausführungsform vorstellbar, bei der ein Nut-Borstenelement mit mindestens einem in Radialrichtung abstehenden Teilabschnitt zusätzlich einen konkav gekrümmten Teilabschnitt aufweist oder ausbildet.

Insbesondere kann das mindestens eine Nut-Borstenelement derart abstehen, dass zumindest ein Teil des Nut-Borstenelements in einer zweidimensionale Projektionsebene außerhalb des Borstenträgerelements angeordnet ist, wenn sowohl das Nut-Borstenelement als auch das Borstenträgerelement in diese Projektionsebene projiziert werden, wobei die Projektionsebene orthogonal zur zentralen Längsachse orientiert ist.

Eine Dimension des Nut-Borstenelements kann an eine Dimension der Siebträgernut angepasst sein. Vorzugsweise ist das Nut-Borstenelement geometrisch derart ausgebildet, dass eine maximale Höhe eines Abschnitts des Nut-Borstenelements entlang der Axialrichtung über einem Befestigungsabschnitt des Nut-Borstenelements an der Stirn- oder Mantelfläche in einem Bereich von 10 mm (einschließlich) bis 20 mm (einschließlich) liegt. Die Höhe des Nut-Borstenelements kann somit einen Abstand zu einem Befestigungsabschnitt des Nut-Borstenelements, z.B. also zu einer Stirnfläche des Borstenträgerelements, bezeichnen, wobei der Abstand entlang oder parallel zur zentralen Längsachse gemessen wird. Eine Länge des Nut-Borstenelements kann eine Länge einer zentralen Mittellinie des Nut-Borstenelements sein, insbesondere eine Länge der zentralen Mittellinie bis zu einem freien Ende des Nut-Borstenelements. Eine Breite eines Nut-Borstenelements kann hierbei eine Dimension des Nut-Borstenelements entlang einer Umfangsrichtung sein.

Durch die Ausbildung des Nut-Borstenelements derart, dass zumindest ein Teilabschnitt in Radialrichtung absteht und/oder zumindest ein Teilabschnitt konkav gekrümmt ist, ist das mindestens eine Nut-Borstenelement derart ausgebildet, dass es beim Einsetzen des Borstenträgerelements in die Brühgruppe, insbesondere beim Einsetzen von unten nach oben, mit einem oberen Randabschnitt an einer Grenzwand, insbesondere an einer oberen Grenzwand, der Siebträgernut anstößt. Diese Grenzwand kann hierbei wie vorhergehend erläutert, auch durch eine Dichtung ausgebildet werden. Hierbei wird die Siebträgernut von einer oder mehreren Grenzwand/Grenzwänden eingefasst bzw. ist von diesen umgeben. Beim weiteren Einsetzen kann dann der obere Randabschnitt des Borstenelements in Radialrichtung nach außen klappen, wobei sich das Nut-Borstenelement entlang der oberen Grenzwand der Siebträgernut und, beim weiteren Einsetzen auch entlang von weiteren Grenzwänden, z.B. seitlichen Grenzwänden, der Siebträgernut entlangschiebt. Somit kann das Nut-Borstenelement beim Einsetzen der Vorrichtung in die Brühgruppe der Espressomaschine eine Einrollbewegung ausführen, wobei der sich bildende eingerollte Abschnitt in Radialrichtung nach außen von dem Borstenträgerelement absteht.

Wird nun das Borstenträgerelement, beispielsweise mit einem geeigneten Betätigungselement, beispielsweise einem Griff, rotiert, so überstreicht das Nut-Borstenelement die die Siebträgernut umgebenden Grenzwände und kann haftende Schmutzpartikel, insbesondere Kaffeereste, lösen. Vorzugsweise besteht das Nut-Borstenelement aus einem Elastomer, insbesondere aus Silikonkautschuk. Weiter kann das Nut-Borstenelement eine Shore-A-Härte aus einem Bereich von 40 bis 80 aufweisen. Die Shore-A-Härte ist in der DIN EN ISO 868:2003-10 und DIN ISO 7619-1:2012-02 festgelegt.

Es ist vorstellbar, dass das Nut-Borstenelement als stabförmiges, zungenförmiges oder plattenförmiges Element ausgebildet ist. Eine plattenförmige Ausbildung kann bedeuten, dass ein Verhältnis zwischen Länge und Breite des Nut-Borstenelements oder ein Verhältnis zwischen Höhe und Breite des Nut-Borstenelements kleiner als 5:1 ist.

Vorzugsweise ist das Nut-Borstenelement derart angeordnet und/oder ausgebildet, dass es bei der Rotation des Borstenträgerelements um die Längsachse zum Reinigen der Siebträgernut im Wesentlichen seine Form behält. Dies kann bedeuten, dass das Nut-Borstenelement eine ausreichende Biege- und/oder Rotationssteifigkeit aufweist.

Alternativ oder kumulativ ist mindestens ein Borstenelement an einer inneren Mantelfläche des ring- oder hohlzylinderförmigen Borstenträgerelements angeordnet. Das Borstenelement kann ein Borstenelement zur Reinigung einer Mantelfläche der Dusche der Brühgruppe sein. Weiter kann das Borstenelement an einem Abschnitt der inneren Mantelfläche angeordnet sein.

Insbesondere in dem Fall, dass das Borstenträgerelement als becherförmiges Element ausgebildet ist und auf einer Bodenfläche des becherförmigen Elements mindestens ein Duschen-Borstenelement angeordnet ist, kann das an der inneren Mantelfläche angeordnete Borstenelement als weiteres Borstenelement oder als weiteres Duschen-Borstenelement bezeichnet werden. Auch in dieser Ausführungsform kann das Borstenträgerelement als becherförmiges Element ausgebildet sein, wobei dann das weitere Duschen-Borstenelement an der inneren Mantelfläche des becherförmigen Elements angeordnet ist. Das an der inneren Mantelfläche angeordnete Borstenelement kann sich hierbei entlang bzw. entgegen einer Radialrichtung in das Innenvolumen hineinerstrecken. Die Radialrichtung kann hierbei orthogonal zur zentralen Längsachse orientiert sein.

Nachfolgend können Duschen-Borstenelemente vereinfacht auch als Borstenelemente bezeichnet werden, wobei jedoch Nut-Borstenelement durchgängig als solche bezeichnet werden. Das/Die Nut-Borstenelement(e) und die Duschen-Borstenelemente können hierbei aus einem elastischen Material ausgebildet sein. Ein Innendurchmesser des Borstenträgerelements, insbesondere des becherförmigen Elements, kann in einem Bereich von 60 mm bis 65 mm liegen. Borstenelemente können sich hierbei in einem Bereich von 0,1 mm bis 5 mm von der entsprechenden Oberfläche wegerstrecken bzw. über der Oberfläche überstehen. Hierdurch können in vorteilhafter Weise verschiedene Maschinentypen gereinigt werden. Beispielsweise kann ein Durchmesser der Dusche bei verschiedenen Maschinentypen in einem Bereich von 54 mm bis 59 mm variieren. Ein großer Überstand der Borstenelemente über der entsprechenden Fläche ermöglicht in vorteilhafter Weise, dass auch Maschinen mit einem kleinen Durchmesser der Dusche gereinigt werden können.

Das Borstenträgerelement, insbesondere das becherförmige Element, kann zur Reinigung derart in der Brühgruppe angeordnet werden, dass die Dusche der Brühgruppe vollständig oder zumindest teilweise in dem Innenvolumen des becherförmigen Elements angeordnet ist. Borstenelemente auf der Bodenfläche können dann eine untere Stirnseite der Dusche kontaktieren, während Borstenelemente an der inneren Mantelfläche die Mantelflächen der Dusche kontaktieren können. Die untere Stirnseite der Dusche kann mindestens eine Auslassöffnung für Wasser aufweisen. In diesem Zustand kann das becherförmige Element um die zentrale Längsachse herum rotiert werden, wodurch die Borstenelemente die entsprechenden Flächen der Dusche überstreichen und daran anhaftende Schmutzpartikel lösen können. Die Reinigung kann unterstützt werden, indem während der Rotation Wasser, insbesondere heißes Wasser, durch die Brühgruppe gepumpt wird. Das Wasser kann hierbei durch die Dusche in das Innenvolumen des becherförmigen Elements hineinfließen und beim Abfließen aus dem Innenvolumen gelöste Schmutzpartikel abtransportieren.

Die an der inneren Mantelfläche des becherförmigen Elements angeordneten Borstenelemente ermöglichen in vorteilhafter Weise eine verbesserte Ablösung von Schmutzpartikeln an Mantelflächen der Dusche, wodurch wiederum eine verbesserte Reinigung der Espressomaschine möglich ist. Durch das Verwenden eines Borstenträgerelements, insbesondere eines becherförmigen Elements, wird eine einfache Handhabbarkeit gewährleistet, da das becherförmige Element zur Reinigung keine komplexen Bewegungen, sondern nur eine einfach durchzuführende Rotation um die zentrale Längsachse durchführen muss.

Insgesamt ermöglicht die Vorrichtung in vorteilhafter Weise die zuverlässige und möglichst vollständige Reinigung Dusche und/oder der Siebträgernut. Weiter ermöglichen die Nut- Borstenelemente in vorteilhafter Weise, dass auch die Dichtung einer Brühgruppe gründlich gereinigt werden kann. Insbesondere kann das Borstenträgerelement derart in die Brühgruppe eingesetzt werden, dass die Nut-Borstenelemente auch eine Dichtung der Brühgruppe kontaktieren. Bei Rotation des Borstenträgerelements überstreichen die Nut-Borstenelemente an der Stirnseite eine Oberfläche der Dichtung und lösen somit ebenfalls daran anhaftende Schmutzpartikel.

In einer weiteren Ausführungsform ist eine Breite des mindestens einen Nut-Borstenelements entlang einer Umfangsrichtung des Borstenträgerelements größer als 50 % eine Höhe des Nut-Borstenelements. Vorzugsweise ist die Breite des Nut-Borstenelements entlang der Umfangsrichtung größer als 80 %, weiter vorzugsweise größer als 100 %, der Höhe des Nut-Borstenelements.

Hierdurch ergibt sich in vorteilhafter Weise eine ausreichend steife Ausbildung des Nut-Borstenelements, sodass beim Rotieren des Borstenträgerelements um dessen zentrale Längsachse das Nut-Borstenelement auch bei Kontakt mit Grenzwänden der Siebträgernut seine Form behält. Hierdurch wiederum ergibt sich in vorteilhafte Weise eine zuverlässige und gründliche Reinigung.

In einer weiteren Ausführungsform ist das mindestens eine Nut-Borstenelement bogenförmig ausgebildet. Hierbei kann das mindestens eine bogenförmige Borstenelement oder zumindest ein Teil davon in Radialrichtung von der Stirn- oder Mantelfläche des Borstenträgerelements abstehen. Mit anderen Worten kann sich das als bogenförmiges Element ausgebildete Nut-Borstenelement entlang der Umfangsrichtung des Borstenträgerelements erstrecken. Das Nut-Borstenelement kann in diesem Fall beispielsweise halbkreis- oder halbringförmig ausgebildet sein. Beide Bogenenden des bogenförmigen Borstenelements können an der Stirnfläche oder Mantelfläche des Borstenträgerelements angeordnet oder befestigt sein. Ist das bogenförmige Nut-Borstenelement mit beiden Bogenenden an dem Borstenträgerelement angeordnet, so kann das Nut-Borstenelement eine Durchgangsöffnung zumindest teilweise umfassen.

An einem Bogenaußenrand und/oder an einem Bogeninnenrand kann mindestens eine Ausnehmung und/oder mindestens ein Vorsprung angeordnet oder ausgebildet sein. Beispielsweise kann ein Bogenaußen- und/oder Bogeninnenrand gezackt ausgebildet sein. Durch die Ausbildung als bogenförmiges Element ergibt sich in vorteilhafter Weise eine hohe Steifigkeit des Nut-Borstenelements gegen tangential zum Trägerelement wirkende Kräfte, während die Steifigkeit gegenüber tangentialen Biegemomenten klein ist. Dies ist insbesondere vorteilhaft für die erläuterte Einrollbewegung und ein möglichst enges Anlegen an die zu reinigenden Flächen.

Weiter kann ein zentraler Abschnitt des mindestens einen bogenförmigen Nut-Borstenelements über mindestens einen Mittelsteg mit dem Borstenträgerelement verbunden sein. Der Mittelsteg kann sich somit zumindest teilweise durch die von dem bogenförmigen Nut-Borstenelement umfasste Durchgangsöffnung erstrecken.

Der Mittelsteg bildet hierbei ein Teil des Borstenelements. Vorzugsweise kann der Mittelsteg konkav gekrümmt ausgebildet sein oder einen konkav gekrümmten, insbesondere also nach innen hin zur zentralen Längsachse des Borstenträgerelements, gekrümmten Abschnitt aufweisen. Hierdurch ergibt sich in vorteilhafter Weise einerseits eine erhöhte Steifigkeit des Nut-Borstenelements. Weiter ergibt sich durch die Anordnung des Mittelsteges auch die gewünschte Bewegung des Nut-Borstenelements entlang von Grenzwänden der Siebträgernut beim Einsetzen der Vorrichtung in die Brühgruppe, die vorhergehend erläutert wurde.

Bevorzugt kann zumindest ein Teil eines Randabschnitts, insbesondere ein in Radialrichtung äußerer Randabschnitt, des mindestens einen Nut-Borstenelements in Radialrichtung, insbesondere nach außen, gekrümmt oder abgeknickt sein. Weist das Nut-Borstenelement ein freies Ende oder eine Spitze auf, beispielsweise im Falle eines borsten- oder plattenförmigen Nut-Borstenelements, so kann ein dieses freie Ende aufweisender Abschnitt, insbesondere in Radialrichtung, gekrümmt oder abgeknickt sein. Ist das Nut-Borstenelement bogenförmig ausgebildet, so kann ein dem Bogenaußenrand umfassender Abschnitt des Nut-Borstenelements, insbesondere in Radialrichtung, gekrümmt oder abgeknickt sein.

Hierdurch ergibt sich in vorteilhafter Weise eine zuverlässigere Bewegung des Nut-Borstenelements entlang der Grenzwände der Siebträgernut beim Einsetzen der Vorrichtung in die Brühgruppe der Espressomaschine. Insbesondere wird durch den gekrümmten oder geknickten Randabschnitt die vorhergehend erläuterte Einrollbewegung entlang der Grenzwände bedingt bzw. wird das Risiko eines davon abweichenden Bewegungsverlaufs minimiert.

In einer weiteren Ausführungsform ist das Borstenträgerelement als becherförmiges Element ausgebildet. Somit umfasst die Vorrichtung mindestens ein becherförmiges Element. Ein becherförmiges Element kann insbesondere ein zumindest teilweise hohlzylinderförmiges Element sein, welches an oder zu mindestens einer Stirnseite hin geöffnet ist. Diese Stirnseite kann einen Becherrand ausbilden. An einer dieser geöffneten Stirnseite gegenüberliegenden Seite kann das becherförmige Element geschlossen sein und eine Bodenfläche aufweisen. Die Bodenfläche kann hierbei vorzugsweise eine ungekrümmte Oberfläche aufweisen. Das becherförmige Element kann zumindest teilweise aus einem elastischen Material bestehen. Das becherförmige Element kann eine zentrale Längsachse aufweisen, die einer zentralen Symmetrieachse des becherförmigen Elements entsprechen kann. Zumindest ein Abschnitt der oder die gesamte Bodenfläche kann orthogonal zu der zentralen Längsachse orientiert sein.

Weiter ist auf einer Bodenfläche des becherförmigen Elements mindestens ein Borstenelement zur Reinigung einer unteren Stirnseite einer Dusche der Brühgruppe der Espressomaschine angeordnet. Dieses Borstenelement kann im Folgenden auch als erstes Duschen-Borstenelement bezeichnet werden. Das auf der Bodenfläche angeordnete Borstenelement kann sich hierbei von der Bodenfläche weg in ein Innenvolumen des becherförmigen Elements erstrecken. Das Innenvolumen kann das Volumen bezeichnen, welches von der Bodenfläche und inneren Mantelflächen sowie einer nicht vorhandenen Deckelfläche, die die offene Stirnseite abdecken würde, des becherförmigen Elements umfasst wird. Beispielsweise kann sich ein Borstenelement von der Bodenfläche parallel zur zentralen Längsachse in das Innenvolumen hinein erstrecken.

In einer weiteren Ausführungsform ist an einer Stirnseite des becherförmigen Elements mindestens ein weiteres Borstenelement zur Reinigung der Dichtung der Brühgruppe angeordnet. Die Stirnseite kann insbesondere die an der offenen Seite angeordnete Stirnseite des becherförmigen Elements sein und den Becherrand ausbilden. Das Borstenelement kann sich hierbei von dieser Stirnseite weg erstrecken, insbesondere parallel zur zentralen Längsachse. Alternativ oder kumulativ kann das an der Stirnseite angeordnete Borstenelement ein Nut-Borstenelement sein, welches vorhergehend erläutert wurde. Derartige Borstenelemente ermöglichen in vorteilhafter Weise, dass auch die Dichtung einer Brühgruppe gründlich gereinigt werden kann. Insbesondere kann das becherförmige Element derart in die Brühgruppe eingesetzt werden, dass die Stirnseite eine Dichtung der Brühgruppe kontaktiert. Bei Rotation des becherförmigen Elements überstreichen die Borstenelemente an der Stirnseite eine Oberfläche der Dichtung und lösen somit ebenfalls daran anhaftende Schmutzpartikel.

In einer bevorzugten Ausführungsform ist ein Duschen-Borstenelement, also ein erstes und/oder ein weiteres Duschen-Borstenelement, bogenförmig ausgebildet, wobei sowohl ein erstes Ende des Borstenelements als auch ein weiteres Ende des Borstenelements mit der inneren Mantelfläche oder mit der Bodenfläche verbunden ist. Mit anderen Worten kann das von der entsprechenden Oberfläche in das Innenvolumen abstehende Borstenelement einen bogenförmigen Verlauf aufweisen. Dies kann bedeuten, dass das Borstenelement von der entsprechenden Oberfläche her in das Innenvolumen hinein gewölbt ist. Weiter kann dies bedeuten, dass ein auf der Bodenfläche oder auf der inneren Mantelfläche angeordnetes Borstenelement kein freies Ende aufweist, welches z.B. im Innenvolumen angeordnet ist.
Hierdurch wird in vorteilhafter Weise eine unerwünscht starke Verformung oder sogar ein Verknicken eines Borstenelements aufgrund von Richtungswechseln beim Überstreichen der zu reinigenden Fläche verringert. Insbesondere wird ein Umklappen bei einem Richtungswechsel der Rotation des becherförmigen Elements und der daraus gegebenenfalls resultierenden Materialverformung des Borstenelements verhindert oder verringert, was eine Nutzungsdauer der Vorrichtung erhöht. Auch ergibt sich in vorteilhafter Weise eine Borstenstruktur, die sich gut an eine zu reinigende Oberfläche anlegen kann und somit den mechanischen Kontakt mit der Oberfläche verbessert. Weiterhin ermöglicht eine derartige Ausbildung eines Borstenelements in vorteilhafter Weise eine einfachere Herstellung der Borstenelemente, insbesondere mittels eines Spritzgussverfahrens.

Weiter kann ein Borstenelement plattenförmig ausgebildet sein. Eine plattenförmige Ausbildung kann bedeuten, dass ein Verhältnis zwischen Höhe und Breite des Borstenelements kleiner als 5:1 ist. Insbesondere kann ein plattenförmiges Element eine Höhe aus einem Bereich von 5 mm bis 20 mm und eine Breite aus einem Bereich von 4,0 mm bis 30,0 mm aufweisen. Durch eine plattenförmige Ausbildung ergibt sich in vorteilhafter Weise eine möglichst große Kontaktfläche zwischen dem Borstenelement und der zu reinigenden Oberfläche, wodurch eine zuverlässige Reinigung erreicht werden kann.

Alternativ kann ein Borstenelement faserförmig ausgebildet sein. Bei einer faserförmigen Ausbildung kann das Verhältnis zwischen Höhe und Breite des Borstenelements größer als oder gleich 5:1 sein .Insbesondere kann ein faserförmiges Element eine Höhe aus einem Bereich von 5 mm bis 20 mm und eine Breite aus einem Bereich von 1,0 mm bis 4,0 mm aufweisen. Hierdurch ergibt sich in vorteilhafter Weise, dass sich einzelne Fasern besser an lokal unterschiedliche Geometrien der zu reinigenden Flächen anpassen können, und dass die Fasern besser von Wasser umströmt werden können. Alternativ kann ein Borstenelement, insbesondere ein plattenförmiges Borstenelement, als Abstreiferelement ausgebildet sein. Dieses bezeichnet ein Borstenelement zum Abschaben oder Abstreifen von Kaffeeresten.

Im Falle eines platten- oder faserförmigen Borstenelements kann die Höhe der Länge des Borstenelements entsprechen. Ist das Borstenelement an einer inneren Mantelfläche des becherförmigen Abschnitts angeordnet, so kann ein solches Borstenelement mindestens einen Borstenabschnitt umfassen, der sich schräg zu einer Radialrichtung in das Innenvolumen des becherförmigen Elements hinein erstreckt. Ist das Borstenelement an einer Bodenfläche des becherförmigen Abschnitts angeordnet, so kann ein solches Borstenelement mindestens einen Borstenabschnitt umfassen, der sich schräg zu einer Normalen der Bodenfläche in das Innenvolumen des becherförmigen Elements hinein erstreckt. Ein Borstenelement kann auch mehrere solche Abschnitte, z.B. zwei Abschnitte, umfassen. An einem freien Ende kann dieser Abschnitt einen Nasenabschnitt aufweisen. Der Nasenabschnitt kann z.B. durch eine Verdickung am freien Ende des Abschnitts ausgebildet werden. Dieser Nasenabschnitt kann bei einer Rotation des becherförmigen Elements über eine zu reinigende Fläche bewegt werden und dabei Kaffeereste abstreifen oder abschaben. Der Abschnitt kann elastisch ausgebildet sein, insbesondere in Form einer oder als Federzunge. Der Abschnitt wird, wenn eine Dusche im Innenvolumen des becherförmigen Elements angeordnet ist, aus einer Ausgangsstellung bewegt und dann aufgrund einer Federkraft gegen die zu reinigende Fläche gedrückt.

Das becherförmige Element kann derartige Borstenelemente ausbilden. Alternativ können derartige Borstenelement auch lösbar an dem becherförmigen Element befestigt werden.

In einer weiteren Ausführungsform wird das Borstenträgerelement oder das becherförmige Element von mindestens einem Einsatzelement und mindestens einem Halterelement ausgebildet. Hierbei weist das Einsatzelement mindestens ein Nut-Borstenelement und/oder mindestens ein Duschen-Borstenelement auf oder bildet dieses aus. Weiter ist das Einsatzelement in, auf oder an dem Halterelement anordenbar. In diesem Fall umfasst die Vorrichtung das Einsatz- und Halterelement. Insbesondere kann das Einsatzelement an dem Halterelement befestigt werden, beispielsweise formschlüssig und/oder kraftschlüssig. Ist das Einsatzelement in, auf oder an dem Halterelement angeordnet, so kann es zumindest einen Teil der Bodenfläche und/oder der inneren Mantelfläche ausbilden.

Das Halterelement kann hierbei mindestens einen Handgriff aufweisen. Weiter kann das Halterelement einen becherförmigen oder zumindest teilweise becherförmigen Abschnitt aufweisen, wobei das Einsatzelement in einem Innenvolumen dieses becherförmigen Abschnittes angeordnet, insbesondere in dieses eingesetzt, werden kann. Auch das Einsatzelement kann becherförmig ausgebildet sein oder zumindest einen becherförmigen Abschnitt aufweisen. Insbesondere kann, wie nachfolgend noch näher erläutert, das Einsatzelement in verschiedene Zustände versetzt werden, wobei das Einsatzelement in einem becherförmigen Zustand in dem Innenvolumen des becherförmigen Abschnitts des Halterelements angeordnet werden kann bzw. in dem eingesetzten Zustand einen becherförmigen Zustand aufweist.

Sowohl Einsatzelement als auch Halterelement können durch ein Spritzgussverfahren hergestellt werden. Hierbei sind die Elemente einfach in entsprechenden Spritzgussformen abzubilden. Insbesondere können die Elemente hergestellt werden, ohne Hinterschneidungen vorzunehmen. Das Einsatzelement kann aus einem elastischen Material bestehen. Das Halterelement kann aus einem steifen, also unelastischen, Material bestehen.

Hierdurch ergibt sich in vorteilhafter Weise eine einfache Herstellung der Vorrichtung. Auch kann es möglich sein, Einsatzelemente mit geometrisch voneinander verschieden ausgebildeten Borstenelementen und/oder Nut-Borstenelementen oder verschiedenen geometrischen Dimensionen in, auf oder an dem Halterelement anzuordnen. Dies ermöglicht in vorteilhafter Weise die Anpassung der Vorrichtung an verschiedene Espressomaschinen.

In einer weiteren Ausführungsform umfasst das Einsatzelement mindestens einen Bodenteil und mindestens einen Mantelteil. Vorzugsweise umfasst das Einsatzelement mehrere Mantelteile, beispielsweise 8 Mantelteile. Ein Rand des Bodenteils kann kreisförmig oder im Wesentlichen kreisförmig ausgebildet sein. Mantelelemente können entlang des Umfangs an dem Rand des Bodenteils angeordnet sein und entlang einer Radialrichtung von dem Bodenteil abstehen. Beispielsweise können die Mantelteile in oktogonaler Symmetrie von dem Bodenteil abstehen. Weiter kann der Bodenteil mindestens ein Borstenelement der Bodenfläche aufweisen oder ausbilden.

Weiter weist der mindestens eine Mantelteil mindestens ein Borstenelement der inneren Mantelfläche auf oder bildet dieses aus. Alternativ oder kumulativ weist der mindestens eine Mantelteil das mindestens eine Nut-Borstenelement auf oder bildet dieses aus. Das Einsatzelement kann zumindest zwei Zustände einnehmen. In einem becherförmigen Zustand kann der Mantelteil des Einsatzelementes zumindest einen Teil des Mantelteils des becherförmigen Elements ausbilden. Weiter kann das Bodenteil des Einsatzelements den Bodenteil des becherförmigen Elements ausbilden. In diesem Zustand kann das Mantelteil geneigt, insbesondere um 90° geneigt, zum Bodenteil des Einsatzelements angeordnet sein.

In einem entfalteten Zustand kann der Mantelteil des Einsatzelements nicht geneigt zum Bodenteil des Einsatzelements sein. In diesem Fall kann er sich z.B. entlang der Radialrichtung vom Bodenteil weg erstrecken. Weiter kann das Einsatzelement von dem entfalteten Zustand in den becherförmigen Zustand versetzt werden. Beispielsweise kann das Mantelteil im entfalteten Zustand hochgeklappt werden, um den becherförmigen Zustand herzustellen. Insbesondere kann das Mantelteil um 90° nach oben geklappt werden. Der becherförmige Zustand kann somit auch als gefalteter Zustand bezeichnet werden. Weiter kann ein Mantelteil auch mindestens ein Borstenelement aufweisen oder ausbilden, welches im becherförmigen Zustand das an der Stirnseite des becherförmigen Elements angeordnete Borstenelement ausbildet, welches insbesondere zum Reinigen der Dichtung der Brühgruppe dient.

Das Einsatzelement kann insbesondere aus Silikonkautschuk bestehen. Weiter kann das Einsatzelement eine Shore-A-Härte aus einem Bereich von 50 bis 80, bevorzugt von 60 bis 70, aufweisen. Eine Stärke des Bodenteils und des Mantelteils des Einsatzelements kann in einem Bereich von 1 mm bis 2 mm liegen. Hierdurch können das Einsatzelement und insbesondere die Nut-Borstenelemente sowie die Duschen-Borstenelemente eine ausreichende Elastizität und eine ausreichend hohe Reißdehnung aufweisen. Weiterhin ist ein solches Einsatzelement robust gegen heißes Wasser und für einen Einsatz in Kontakt mit Lebensmitteln geeignet. Das mindestens eine Mantelteil kann verschwenkbar an dem Bodenteil, insbesondere an einem Randabschnitt des Bodenteils, befestigt sein.

In einer weiteren Ausführungsform weist das Bodenteil und/oder das Mantelteil mindestens ein Verbindungsmittel zur mechanischen Verbindung des Einsatzelements mit dem Halterelement auf oder bildet dieses aus. Insbesondere können das Einsatzelement, also das Bodenteil und/oder das Mantelteil, und das Halterelement korrespondierende Verbindungsmittel aufweisen. Beispielsweise kann das Halterelement ein oder mehrere Verbindungszapfen aufweisen, wobei das Einsatzelement ein oder mehrere Aussparungen oder Öffnungen zur Aufnahme dieser Verbindungszapfen aufweist. Die Verbindungsmittel können hierbei eine zuverlässige mechanische Verbindung zwischen dem Halterelement und dem Einsatzelement ermöglichen, insbesondere eine form- und/oder kraftschlüssige Verbindung. Die Verbindungsmittel können hierbei derart ausgebildet sein, dass sich die mechanische Verbindung zwischen dem Einsatzelement und dem Halterelement nicht aufgrund der Kräfte, die bei einem Einsetzen der Vorrichtung in die Brühgruppe und bei einer Rotation der Vorrichtung zum Reinigen auf das Einsatzelement wirken, löst. Hierdurch ergibt sich in vorteilhafter Weise eine einfache Herstellung der Vorrichtung, die eine zuverlässige Handhabung zum Einsetzen und Reinigen ermöglicht.

In einer weiteren Ausführungsform umfasst das Einsatzelement mindestens zwei Mantelteile. Diese Mantelteile können hierbei entlang eines Umfangs des Bodenteils benachbart zueinander angeordnet sein. Weiter sind Randabschnitte der Mantelteile, insbesondere entlang der Umfangrichtung benachbarte Randabschnitte der Mantelteile, derart ausgebildet, dass im becherförmigen Zustand des Einsatzelements mindestens ein einsatzelementseitiger Verbindungszapfen zur Anordnung in einer halterelementseitigen Aussparung und/oder mindestens eine einsatzelementseitige Aussparung zur Aufnahme eines halterelementseitigen Verbindungszapfens ausgebildet wird. Insbesondere kann jeder der benachbarten Mantelteile einen Teil des Verbindungszapfens, z.B. eine Hälfte des Verbindungszapfens, und/oder einen Teil der Aussparung ausbilden. Weist ein Mantelteil ein bogenförmiges Nut-Borstenelement auf oder bildet dieses aus, so können Bogenenden des Nut-Borstenelements jeweils an Randabschnitten des Mantelteils befestigt bzw. mit diesen Randabschnitten verbunden sein, die im becherförmigen Zustand einen Verbindungszapfen ausbilden.

In dem becherförmigen Zustand des Einsatzelements kann der Verbindungszapfen oder -block ein sich in Radialrichtung des becherförmigen Einsatzelements nach außen verbreitender Zapfen sein. Beispielsweise kann der einsatzelementseitige Verbindungszapfen teilpyramidenförmig ausgebildet sein, wobei die benachbarten Mantelteile jeweils ein Teil, insbesondere die Hälfte, des teilpyramidenförmigen Verbindungszapfens ausbilden. Der Verbindungszapfen kann hierbei im becherförmigen Zustand an einem oberen Randabschnitt der Mantelteile angeordnet oder ausgebildet werden. Unterhalb des Verbindungszapfens kann im becherförmigen Zustand eine Aussparung ausgebildet sein.

Weiter kann das Halterelement eine zu dem einsatzelementseitigen Verbindungszapfen korrespondierende Aussparung aufweisen, in welcher der Verbindungszapfen angeordnet werden kann. Diese Aussparungen können in Umfangsrichtung entlang einer oberen Stirnseite des becherförmigen Abschnitts des Halterelements angeordnet sein.

Beispielsweise kann diese Stirnseite entlang einer Umfangsrichtung einen Zinnen ausbildenden Verlauf aufweisen, wobei die Aussparung zwischen zwei in Umfangsrichtung benachbarten Zinnen ausgebildet wird. Die Zinnen können hierbei nach oben vorstehende Abschnitte am Becherrand des becherförmigen Abschnitts des Halterelements bezeichnen, die auch als Zinnenabschnitte bezeichnet werden können.

Weiter kann eine solche Aussparung ebenfalls teilzylinderförmig ausgebildet sein, um einen teilzylinderförmigen Verbindungszapfen aufzunehmen. Hierbei können Dimensionen der Aussparung derart gewählt werden, dass eine kraftschlüssige Verbindung ermöglicht wird. Beispielsweise kann eine Dimension der Aussparung um ein vorbestimmtes Maß oder einen vorbestimmten Prozentsatz geringer als eine entsprechende Dimension des in der Aussparung anzuordnenden Verbindungszapfens gewählt werden, um eine form- und kraftschlüssige Verbindung zu ermöglichen. Wird beispielsweise der Verbindungszapfen des Einsatzelements in der Aussparung des Halterelements angeordnet, so kann eine in Umfangsrichtung und in eine entgegen der Radialrichtung sowie in eine nach unten orientierte Richtung formschlüssige Verbindung bereitgestellt werden. Für nach oben wirkende Kräfte kann eine kraftschlüssige Verbindung bereitgestellt werden. Weiter wird durch das Anordnen des von zwei Mantelteilen ausgebildeten Verbindungszapfens in einer entsprechenden Aussparung der becherförmige Zustand des Einsatzelementes mechanisch gesichert.

Auch das Bodenteil des Einsatzelements kann in einem Zwischenbereich zwischen den Verbindungsabschnitten zu den benachbarten Mantelteilen eine Aussparung aufweisen. Beispielsweise kann ein Rand des Bodenteils in diesem Zwischenbereich eine Aussparung, insbesondere eine bogen- oder kreisförmige Aussparung, aufweisen. Eine Aussparung kann hierbei als Durchgangsöffnung ausgebildet sein.

Diese Aussparung kann zur Aufnahme eines halterelementseitigen Verbindungszapfens dienen. Dieser kann sich beispielsweise durch die erläuterte Aussparung im Bodenteil und in die Aussparung zwischen den Mantelteilen erstrecken. Weiter kann ein solcher halterelementseitiger Verbindungszapfen gestuft ausgebildet sein, wobei eine Unterseite des von den Mantelteilen ausgebildeten Verbindungszapfens auf einer ersten Oberfläche des gestuft ausgebildeten halterelementseitigen Verbindungszapfens aufliegt, wenn dieser in der Aussparung zwischen den Mantelteilen angeordnet ist. Weiter kann ein entlang der Radialrichtung innenliegende Stirnfläche des von den Mantelteilen ausgebildeten Verbindungszapfens an einer weiteren Oberfläche des gestuft ausgebildeten halterelementseitigen Verbindungszapfens anliegen.

Durch die Anordnung zumindest eines Abschnitts des Verbindungszapfens des Halterelements in der einsatzelementseitigen Aussparung, insbesondere der unterhalb des einsatzelementseitigen Verbindungszapfens im becherförmigen Zustand, kann ebenfalls in Umfangsrichtung und in eine nach unten orientierte Richtung eine formschlüssige Verbindung hergestellt werden.

Weiter kann das Bodenelement Durchgangsöffnungen für halterelementseitige Verbindungszapfen aufweisen. Diese Durchgangsöffnungen können in einem Innenbereich des Bodenteils angeordnet sein. Insbesondere können diese Durchgangsöffnungen entlang einer Kreislinie angeordnet sein, wobei ein Radius der Kreislinie kleiner als ein Radius einer Randlinie des Bodenteils ist. In diesem Fall kann das Halterelement zylinderförmige Zapfen aufweisen, die sich in oder durch die Durchgangsöffnungen erstrecken, wenn das Einsatzelement in, auf oder an dem Halterelement angeordnet wird. Ein Durchmesser der Durchgangslöcher kann hierbei um ein vorbestimmtes Maß oder einen vorbestimmten Prozentsatz geringer als ein Außendurchmesser dieser Verbindungszapfen sein.

Hierdurch kann eine (weitere) Verbindung zwischen Einsatzelement und Halterelement bereitgestellt werden, wobei diese Verbindung in senkrecht zu einer Mittelachse einer Durchgangsöffnung orientierte Richtung eine formschlüssige Verbindung bereitstellt sowie in nach oben oder unten orientierte Richtungen eine kraftschlüssige Verbindung bereitstellt. Durch die erläuterten Verbindungsarten ergibt sich in vorteilhafter Weise eine zuverlässige mechanische Verbindung zwischen Einsatzelement und Halterelement, die in einfacher Weise hergestellt und gelöst werden kann.

In einer weiteren Ausführungsform umfasst die Vorrichtung mindestens ein Befestigungsmittel zur Befestigung der Vorrichtung an oder in der Brühgruppe der Espressomaschine. Das Befestigungsmittel kann insbesondere zur Befestigung der Vorrichtung an einem Bajonettverschlussabschnitt der Brühgruppe dienen. Mit anderen Worten kann das Befestigungsmittel dazu dienen, die Vorrichtung in den brühgruppenseitigen Bajonettverbindungsteil einzuhängen. Der Bajonettverschlussabschnitt der Brühgruppe kann hierbei die Siebträgernut umfassen oder ausbilden. Insbesondere kann das becherförmige Element, weiter insbesondere das Halterelement, das Befestigungsmittel aufweisen oder ausbilden. Das Befestigungsmittel kann weiter zur formschlüssigen Verbindung der Vorrichtung mit der Brühgruppe dienen. Das Befestigungsmittel ist jedoch derart ausgebildet, dass eine Rotation der Vorrichtung auch im befestigten, insbesondere eingehängten, Zustand möglich ist. Insbesondere kann das Befestigungsmittel als Nockenabschnitt ausgebildet sein, welches von einer äußeren Mantelfläche des becherförmigen Elements, insbesondere des Halterelements, absteht. Diese können in der Siebträgernut angeordnet werden. Hierdurch ergibt sich in vorteilhafter Weise eine bequeme Handhabung der Vorrichtung für das Reinigen der Espressomaschine.

In einer weiteren Ausführungsform weist die Vorrichtung mindestens ein Führungsmittel zur Führung des aus einem Innenvolumen des Borstenträgerelements, insbesondere des becherfömigen Elements, ausströmenden Wassers auf oder bildet dieses aus. Das Führungsmittel kann zur gezielten Leitung des abfließenden Wassers dienen und somit ein unkontrolliertes Abtropfen verhindern oder zumindest reduzieren.

In einer weiteren Ausführungsform weist das Borstenträgerelement, insbesondere das becherförmige Element, an einer äußeren Mantelfläche oder einem Abschnitt davon eine Ablaufrinne auf oder bildet diese aus. Die Ablaufrinne kann hierbei ein Führungsmittel sein. Eine Ablaufrinne kann beispielsweise durch einen von der äußeren Mantelfläche abstehenden Abschnitt ausgebildet werden. Die Ablaufrinne kann hierbei als integraler Abschnitt des Borstenträgerelements, insbesondere des becherförmigen Elements, weiter insbesondere des Halterelements, oder als ein von dem Borstenträgerelement, insbesondere dem becherförmigen Element, separates Bauteil ausgebildet sein. Die Ablaufrinne kann im Querschnitt teilkreisförmig ausgebildet sein. Die Ablaufrinne kann hierbei derart angeordnet und/oder ausgebildet sein, dass Wasser, welches z.B. über die obere Stirnseite oder im Bereich der oberen Stirnseite aus dem Innenvolumen austritt und an den äußeren Mantelflächen nach unten strömt, von der Ablaufrinne aufgefangen und geführt wird. Somit bildet die Ablaufrinne ein Führungsmittel für einen Fluidstrom des ablaufenden Wassers auf. Die Ablaufrinne kann hierbei entlang des vorbestimmten Abschnittes der äußeren Mantelfläche verlaufen. Die Ablaufrinne kann hierbei geneigt sein. Dies kann bedeuten, dass eine zentrale Symmetrieachse der Ablaufrinne bzw. eine zentrale Mittelachse gegenüber einer Ebene, die orthogonal zu der zentralen Längsachse des Borstenträgerelements orientiert ist, geneigt ist und nicht in einer solchen Ebene verläuft. Durch die Ablaufrinne kann abfließendes Schmutzwasser an eine gewünschte Stelle geführt werden. Z.B. kann die Ablaufrinne an einem Ende eine Auslassöffnung oder einen Überlauf für ablaufendes Wasser ausbilden oder aufweisen. Durch das Vorsehen einer Ablaufrinne wird in vorteilhafter Weise verhindert, dass ablaufendes Schmutzwasser unkontrolliert von dem becherförmigen Element abtropft. Vielmehr wird dieses gezielt und somit kontrolliert geleitet.

In einer weiteren Ausführungsform weist die Vorrichtung mindestens ein trichterförmiges Element auf oder bildet dieses aus. Das trichterförmige Element kann hierbei ein Führungsmittel sein. Beispielsweise kann die Vorrichtung ein trichterförmiges Element aufweisen, welches derart angeordnet und/oder ausgebildet ist, das aus dem Innenvolumen des Borstenträgerelements, insbesondere des becherförmigen Elements, abfließende Schmutzwasser in ein Innenvolumen des trichterförmigen Führungsmittels fließt. Beispielsweise kann das trichterförmige Führungsmittel derart angeordnet oder ausgebildet werden, dass eine Abflussöffnung des trichterförmigen Führungsmittels über einer Auffangschale der Espressomaschine angebracht ist, wenn die Vorrichtung in die Brühgruppe eingesetzt ist. Beispielsweise kann eine zentrale Mittellinie der Abflussöffnung des trichterförmigen Führungsmittels parallel, vorzugsweise konzentrisch, zu der zentralen Längsachse des becherförmigen Elements angeordnet sein. Das trichterförmige Führungsmittel und das Borstenträgerelement, insbesondere das Halterelement des Borstenträgerelements, können als integrale Bauteile oder als separate Bauteile ausgebildet sein. Z.B. kann das trichterförmige Element an das Borstenträgerelement ansteckbar oder fest mit diesem verbunden sein. Vorstellbar ist auch, dass die erläuterte Ablaufrinne ablaufendes Wasser in das Innenvolumen des trichterförmigen Elements leitet. Hierdurch ergibt sich in vorteilhafter Weise, dass ablaufendes, unter Umständen heißes, Schmutzwasser nicht unkontrolliert abtropft, sondern gezielt abgeleitet werden kann.

In einer alternativen Ausführungsform weist die Vorrichtung mindestens eine Führungsrippe auf oder bildet diese aus. Die Führungsrippe kann hierbei ein Führungsmittel sein. Beispielsweise kann die Führungsrippe derart ausgebildet und/oder angeordnet sein, dass die mindestens eine Führungsrippe unter dem Borstenträgerelement, insbesondere dem becherförmigen Element, angeordnet ist und von dem Borstenträgerelement, insbesondere von der äußeren Mantelfläche, abfließendes Wasser an einer Unterkante der Führungsrippe aufgrund von Adhäsionskräften entlang rinnen kann. Somit kann es gezielt abgeführt werden. Auch bei dieser Ausführungsform kann das abfließende Wasser mittels der erläuterten Ablaufrinne zu der Führungsrippe geleitet werden. Die Unterkante kann hierbei gegenüber der zentralen Längsachse des Borstenträgerelements geneigt orientiert sein. Z.B. können die Unterkante und die zentrale Längsachse einen Winkel aus einem Bereich von 10° bis 80° , bevorzugt einen Winkel aus einem Bereich von 20° bis 70°, weiter bevorzugt einen Winkel gleich oder größer als 20° einschließen. Die Unterkante der Führungsrippe kann an einer Wandfläche enden, wobei eine Oberflächennormale dieser Wandfläche orthogonal zur zentralen Längsachse orientiert sein kann. Somit rinnt abfließendes Wasser entlang der Unterkante zur Wand und dann an der Wand entlang. Durch die Ausbildung mit einer Führungsrippe ergibt sich in vorteilhafter Weise eine besonders einfache Herstellung der Vorrichtung, insbesondere durch ein Spritzgussverfahren.

Weiter vorgeschlagen wird ein Verfahren zur Reinigung einer Espressomaschine, wobei eine Vorrichtung gemäß einer der in dieser Offenbarung beschriebenen Ausführungsformen in eine Brühgruppe der Espressomaschine eingesetzt wird. Die Vorrichtung kann hierbei derart in die Brühgruppe eingesetzt werden, dass zumindest ein Teil einer Dusche der Brühgruppe in einem Innenvolumen eines Borstenträgerelements, insbesondere eines als becherförmiges Element ausgebildeten Borstenträgerelements, der Vorrichtung angeordnet ist. Weiter können Nut-Borstenelemente der Vorrichtung Grenzwände der Siebträgernut der Brühgruppe kontaktieren. Alternativ oder kumulativ können Duschen-Borstenelemente der Vorrichtung die Dusche und gegebenenfalls eine Dichtung der Brühgruppe kontaktieren. Weiter wird die Vorrichtung aus einer Ausgangsstellung um eine zentrale Längsachse des Borstenträgerelements der Vorrichtung rotiert. Hierdurch ergibt sich in vorteilhafter Weise eine einfach durchzuführende Reinigung.

Die Erfindung wird anhand mehrerer Ausführungsbeispiele näher erläutert. Die Figuren zeigen:
- Fig. 1: einen schematischen Querschnitt durch eine Brühgruppe mit Kaffeeresten,
- Fig. 2: einen schematischen Querschnitt durch eine Brühgruppe mit einer eingespannten erfindungsgemäßen Vorrichtung,
- Fig. 3a: eine schematische Seitenansicht einer erfindungsgemäßen Vorrichtung,
- Fig. 3b: eine schematische Draufsicht auf die in Fig. 3a dargestellte Vorrichtung,
- Fig. 4a: eine schematische Seitenansicht eines Duschen-Borstenelements in einem ersten Zustand,
- Fig. 4b: eine schematische Seitenansicht des in Fig. 4a dargestellten Duschen-Borstenelements in einem weiteren Zustand,
- Fig. 4c: eine schematische Seitenansicht des in Fig. 4a dargestellten Duschen-Borstenelements in einem weiteren Zustand,
- Fig. 5: eine perspektivische Ansicht eines Halterelements,
- Fig. 6: eine perspektivische Ansicht eines Einsatzelements im entfalteten Zustand,
- Fig. 7: eine Explosionszeichnung des Halter- und Einsatzelements ohne Nut-Borstenelemente,
- Fig. 8: eine perspektivische Ansicht einer erfindungsgemäßen Vorrichtung in einer weiteren Ausführungsform,
- Fig. 9: einen schematischen Querschnitt durch eine Brühgruppe mit einer eingesetzten Vorrichtung,
- Fig. 10: eine perspektivische Ansicht eines Halterelements in einer weiteren Ausführungsform und
- Fig. 11: einen schematischen Querschnitt durch ein becherförmiges Element.

Nachfolgend bezeichnen gleiche Bezugszeichen Elemente mit gleichen oder ähnlichen technischen Merkmalen.

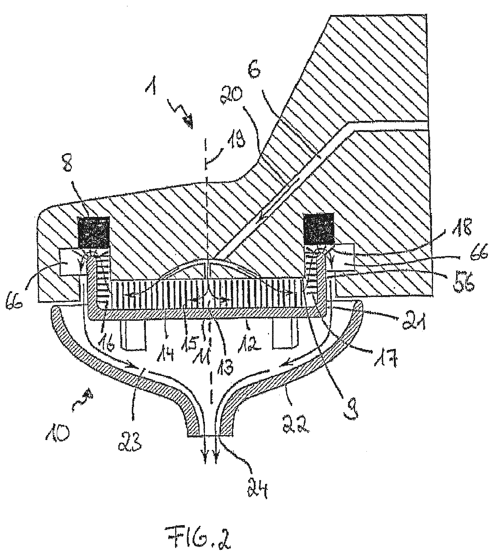

Fig. 2 zeigt eine perspektivische Ansicht einer erfindungsgemäßen Vorrichtung 10. Die Vorrichtung 10 umfasst ein becherförmiges Element 11, wobei das becherförmige Element 11 einen Bodenteil 12 und einen Mantelteil 56 aufweist. Das becherförmige Element 11 umfasst ein Innenvolumen 13. Weiter ist das becherförmige Element 11 nach oben hin geöffnet. Dies kann bedeuten, dass in einem eingesetzten Zustand der Vorrichtung 10, in der die Vorrichtung 10 in die Brühgruppe 1 eingesetzt ist, das becherförmige Element 11 zur Brühgruppe hin geöffnet ist. Insbesondere können Teile der Brühgruppe 1, insbesondere die Dusche 9, aufgrund der Öffnung in das Innenvolumen 13 hineinragen. Weiter dargestellt ist, dass an einer dem Innenvolumen 13 zugewandte Bodenfläche 14 des Bodenteils 12 Borstenelemente 15 angeordnet sind. Der Übersichtlichkeit halber ist nur ein Borstenelement 15 mit einem Bezugszeichen versehen. Diese Borstenelemente 15 erstrecken sich von der Bodenfläche 14 in das Innenvolumen 13 hinein.

Weiter ist dargestellt, dass an einer dem Innenvolumen 13 zugewandte innere Mantelfläche 16 des becherförmigen Elements 11 weitere Borstenelemente 17 angeordnet sind. Der Übersichtlichkeit halber ist nur ein weiteres Borstenelement 17 mit einem Bezugszeichen versehen. Die weiteren Borstenelemente 17 erstrecken sich von der inneren Mantelfläche 16 weg in das Innenvolumen 13. Weiter ist dargestellt, dass an einer oberen Stirnfläche des becherförmigen Elements 11, die einen Becherrand ausbildet, Nut-Borstenelemente 18 angeordnet sind, wobei sich diese Nut-Borstenelemente 18 von der oberen Stirnfläche in ein Volumen außerhalb des Innenvolumens 13 erstrecken. Die obere Stirnseite bezeichnet hierbei eine Stirnseite am offenen Ende des becherförmigen Elements 11.

Im eingesetzten Zustand der Vorrichtung 10 treten die an der Bodenfläche 14 angeordneten Borstenelemente 15 in mechanischen Kontakt mit einer Unterseite der Dusche 9, wobei an der Unterseite Auslässe des Wasserführungskanals 6 angeordnet sind. Ebenfalls treten die in der inneren Mantelfläche 16 angeordneten weiteren Borstenelemente 17 in mechanischen Kontakt mit einer äußeren Mantelfläche der Dusche 9. Weiter treten die weiteren Nut-Borstenelemente 18, die an der oberen Stirnseite angeordnet sind, in mechanischen Kontakt mit der Dichtung 8 und gegebenenfalls noch mit einem Abschnitt der äußeren Mantelfläche der Dusche 9 sowie weiteren Abschnitten einer Grenzwand einer Siebträgernut 66. Die Dichtung 8 bildet hierbei einen Teil einer oberen Grenzwand einer Siebträgernut 66.

Weiter dargestellt ist eine zentrale Symmetrieachse 19 des becherförmigen Elements 11. Zur Reinigung wird das becherförmige Element 11 um die zentrale Symmetrieachse 19 verdreht, beispielsweise um +/-30° aus einer Ausgangsstellung. Bei dieser Verdrehung überstreichen die an der Bodenfläche 14 angeordneten Borstenelemente 15 die Unterseite der Dusche 9, die an der inneren Mantelfläche 16 angeordneten weiteren Borstenelemente die äußeren Mantelflächen der Dusche 9 sowie die an der oberen Stirnseite angeordneten Nut-Borstenelemente 18 die Dichtung 8 sowie gegebenenfalls weitere Abschnitte einer Grenzwand der Siebträgernut 66. Hierdurch können anhaftende Kaffeereste 7 (siehe Fig. 1) durch mechanischen Kontakt von der Dusche 9 und der Dichtung 8 gelöst werden. Dies kann unterstützt werden, wenn während der Reinigung, insbesondere während der Rotation, Wasser, insbesondere heißes Wasser, durch den Wasserzufuhrkanal 6 zugeführt wird. In Fig. 2 ist durch Pfeile 20 ein Strömungsverlauf des zugeführten Wassers dargestellt. Dieses strömt durch den Wasserzuführkanal 6 der Brühgruppe 1 und durch die an der Unterseite der Dusche 9 angeordneten Auslässe in das Innenvolumen 13 des becherförmigen Elements 11. Hierdurch wird das Innenvolumen 13 mit Wasser gefüllt. Ist das Innenvolumen 13 gefüllt, so tritt das Wasser über die oberen Stirnseiten des becherförmigen Elements 11 und strömt an einer äußeren Mantelfläche 21 des becherförmigen Elements 11 entlang. Das strömende Wasser kann hierbei gelöste Kaffeereste 7 transportieren, wodurch die gelösten Kaffeereste 7 aus dem Innenvolumen 13 heraustransportiert werden können.

In Fig. 2 ist dargestellt, dass die Vorrichtung 10 ein trichterförmiges Element 22 umfasst, welches unter dem becherförmigen Element 11 angeordnet ist. Insbesondere ist das trichterförmige Element 22 derart angeordnet und ausgebildet, dass das an den äußeren Mantelflächen 21 entlangströmende Wasser in ein Innenvolumen 23 des trichterförmigen Elements 22 strömt und dann durch eine zentrale Auslassöffnung 24 des trichterförmigen Elements 22 aus diesem Innenvolumen 23 ausströmt. Hierbei ist dargestellt, dass ein Teil des becherförmigen Elements 11 in dem Innenvolumen 23 des trichterförmigen Elements 22 angeordnet ist. Weiter ist dargestellt, dass eine zentrale Symmetrieachse des trichterförmigen Elements und der zentralen Auslassöffnung 24 konzentrisch zur zentralen Symmetrieachse 19 des becherförmigen Elements 11 angeordnet ist. Das aus der zentralen Auslassöffnung 24 ausströmende Wasser kann hierbei in eine in der Regel in einer Espressomaschine vorhandene Auffangschale oder Abflusseinrichtung strömen.

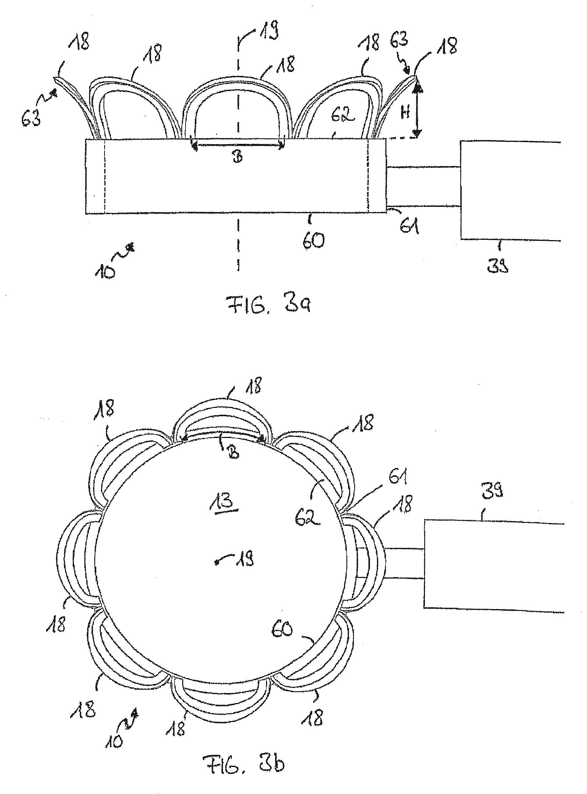

In Fig. 3a ist eine schematische Seitenansicht einer erfindungsgemäßen Vorrichtung 10 zur Reinigung von Espressomaschinen dargestellt. Die Vorrichtung 10 umfasst ein hohlzylinderförmiges Borstenträgerelement 60, welches einen Mantelteil 61 aufweist. Das Borstenträgerelement 60 kann hierbei nach unten und nach oben hin geöffnet sein. Somit können Teile der Brühgruppe 1, insbesondere die Dusche 9, aufgrund der Öffnung in das von dem Borstenträgerelement 60 umfasste Innenvolumen 13 (siehe Fig. 3b) hineinragen.

Weiter dargestellt ist ein Griff 39, der an dem Borstenträgerelement 60 angeordnet ist. Weiter dargestellt ist eine zentrale Symmetrieachse 19 des Borstenträgerelements 60.

Weiter dargestellt sind Nut-Borstenelemente 18. Diese Nut-Borstenelemente 18 sind an einer Stirnfläche 62, insbesondere einer oberen Stirnfläche 62, des Borstenträgerelements 60 angeordnet. Weiter ist dargestellt, dass die Nut-Borstenelemente 18 von dieser Stirnfläche 62 abstehen und dass die Nut-Borstenelemente 18 bogenförmig ausgebildet sind.

Aus den in Fig. 3a und Fig. 3b dargestellten Ausführungsbeispielen ist ersichtlich, dass die Nut-Borstenelemente 18 in Radialrichtung, bezogen auf die zentrale Symmetrieachse 19 das Borstenträgerelement 60, nach außen abstehen. Insbesondere ist zumindest ein Teil der Nut-Borstenelemente 18 in Radialrichtung nach außen gekrümmt. Hierbei können insbesondere Abschnitte an einem äußeren Rand der bogenförmigen Nut-Borstenelemente 18 nach außen gekrümmt oder geknickt.

Weiter dargestellt ist, dass die Enden der bogenförmigen Nut-Borstenelemente 18 an der Stirnseite 62 enden und insbesondere daran befestigt sind. Es ist möglich, dass das Borstenträgerelement 60 und die Nut-Borstenelemente 18 einteilig ausgebildet sind, z.B. als Spritzgussteil.

Weiter dargestellt ist, dass eine Breite eines Nut-Borstenelements größer als eine Höhe H des Nut-Borstenelements über der Stirnfläche 62 ist. Hierbei wird die Höhe H entlang oder parallel zur zentralen Symmetrieachse 19 gemessen. Die Breite B eines Nut-Borstenelements 18 bezeichnet hierbei eine Dimension entlang des Umfangs von einem ersten Ende bis zu dem weiteren Ende des bogenförmigen Nut-Borstenelements 18.

In Fig. 3b ist eine schematische Draufsicht auf die in Fig. 3a dargestellte Vorrichtung 10 dargestellt. Insbesondere ist ersichtlich, dass Nut-Borstenelemente 18 entlang des gesamten Umfangs des Borstenträgerelements 60 an dessen Stirnfläche 62 angeordnet sind. Weiter ist auch der bogenförmige Verlauf eines einzelnen Nut-Borstenelements 18 ersichtlich, wobei die bogenförmigen Nut-Borstenelemente 18 jeweils ein Innenvolumen einfassen. Auch ist aus Fig. 3b ersichtlich, dass zumindest ein Teil oder ein Teilabschnitt der Nut-Borstenelemente 18 in Radialrichtung, bezogen auf das hohlzylinderförmige Borstenträgerelement 60, nach außen gekrümmt oder abgeknickt sind.

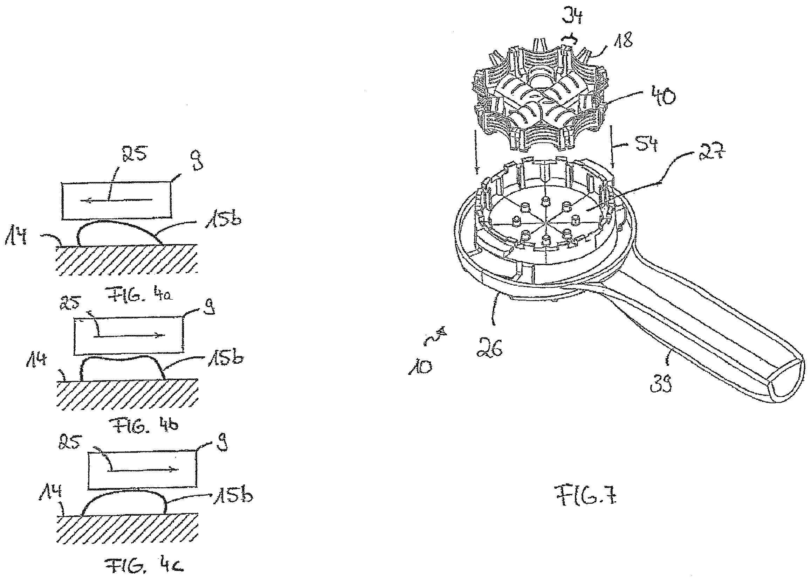

Fig. 4a zeigt eine schematische Seitenansicht eines Borstenelements 15b in einer weiteren Ausführungsform. Das in Fig. 4a dargestellte Borstenelement 15b kann ein Borstenelement sein, welches auf einer Bodenfläche 14 eines becherförmigen Elements 11 angeordnet sein kann. Auch kann das in Fig. 4a dargestellte Borstenelement ein Nut-Borstenelement 18, insbesondere ein bogenförmiges Nut-Borstenelement 18, sein. Weiter dargestellt ist durch einen Pfeil 25 eine Bewegungsrichtung einer Relativbewegung zwischen der Bodenfläche 14 und einer zu reinigenden Oberfläche, beispielsweise einer Unterseite einer Dusche 9. Das Borstenelement 15b kann plattenförmig ausgebildet sein. Weiter dargestellt ist, dass sowohl ein erstes Ende des Borstenelements 15b als auch ein weiteres Ende des Borstenelements 15b mit der Bodenfläche 14 verbunden sind. Dies bedeutet, dass das Borstenelement 15b kein freies Ende aufweist. Weiter dargestellt ist, dass das Borstenelement 15b bogenförmig ausgebildet ist und von der Bodenfläche 14 in ein Innenvolumen 13 (siehe Fig. 2) des becherförmigen Elements absteht.

In den Fig. 4b und 4c ist das in Fig. 4a dargestellte Borstenelement 15b jeweils in weiteren Zuständen dargestellt, die auftreten, wenn die Bewegungsrichtung der Relativbewegung zwischen Bodenfläche 14 und Dusche 9 gewechselt wird. Es ist ersichtlich, dass im Vergleich zu den in Fig. 4b und Fig. 4c dargestellten Zuständen die Verformungen des Borstenelements 15b geringer sind.

Fig. 5 zeigt eine perspektivische Ansicht eines Halterelements 26 des becherförmigen Elements 11. Das Halterelement 26 weist einen becherförmigen Abschnitt 27 auf oder bildet diesen aus. Hierbei kann eine zentrale Symmetrieachse des becherförmigen Abschnitts 27 des Halterelements 26 konzentrisch zur zentralen Symmetrieachse 19 (siehe Fig. 2) des becherförmigen Elements 11 sein.

Der becherförmige Abschnitt 27 umfasst einen Bodenteil 28 und einen Mantelteil 29. Auf einer Bodenfläche 30 des Bodenteils 28, die einem Innenvolumen des becherförmigen Abschnitts 27 zugewandt ist, sind zylinderförmige Verbindungszapfen 31 angeordnet, die sich von der Bodenfläche 30 weg in das Innenvolumen erstrecken. Der Übersichtlichkeit halber ist nur ein Verbindungszapfen 31 mit einem Bezugszeichen versehen. Weiter dargestellt ist, dass eine obere Stirnseite des becherförmigen Abschnitts 27, insbesondere des Mantelteils 29, Aussparungen 32, 33 aufweist, wobei die obere Stirnseite den Becherrand des becherförmigen Abschnitts 27 ausbildet. Diese Aussparungen 32, 33 sind entlang einer Umfangsrichtung des Mantelteils 29 beabstandet voneinander angeordnet. Somit werden zwischen zwei entlang der Umfangsrichtung benachbarten Aussparungen 32, 33 Zinnenabschnitte an der oberen Stirnseite des Mantelteils 29 ausgebildet. Aussparungen 32 können hierbei als sogenannte Verbindungsaussparungen bezeichnet werden. Diese dienen einer Aufnahme eines einsatzelementseitigen Verbindungszapfens 34 (siehe Fig. 7). Diese Aussparungen 32 können entlang der Umfangsrichtung eine Länge von 2 mm aufweisen. Entlang einer Radialrichtung, die von einer zentralen Symmetrieachse des becherförmigen Abschnitts 27 weg orientiert ist, vor der Verbindungsaussparung 32 ist eine Führungsleiste 35 angeordnet. Eine in Radialrichtung nach außen orientierte Seitenfläche der Führungsleiste 35 sowie die Seitenflächen der zu der Verbindungsaussparung 32 benachbarten Zinnenabschnitte begrenzen ein Aufnahmevolumen, in dem der vorhergehend erläuterte einsatzelementseitige Verbindungszapfen 34 angeordnet werden kann. Das Aufnahmevolumen kann insbesondere teilpyramidenförmig ausgebildet sein, wobei sich eine Breite entlang der Radialrichtung vergrößert. Weitere Aussparungen 33 des becherförmigen Abschnittes 27 können auch als Ausflussaussparungen 33 bezeichnet werden. Diese dienen dazu, dass Wasser, insbesondere Schmutzwasser, wie durch Pfeile 20 schematisch angedeutet, aus dem Innenvolumen des becherförmigen Abschnitts 27 ausströmen kann.

In Fig. 5 ist dargestellt, dass Verbindungsaussparungen 27 und Abflussaussparungen 33 voneinander verschiedene Dimensionen, insbesondere voneinander verschiedene Breiten entlang der Umfangsrichtung, aufweisen. Weiter dargestellt ist, dass die Vorrichtung 10, insbesondere das Halterelement 26, zwei Ablaufrinnen 36 aufweist. Diese Laufrinnen 36 sind an einer äußeren Mantelfläche des becherförmigen Abschnitts 27 des Halterelements 26 angeordnet. Die Ablaufrinnen 36 ragen hierbei von dieser äußeren Mantelfläche ab und bilden eine Vertiefung aus, in der das an den äußeren Mantelflächen entlangströmende Wasser aufgenommen und abgeführt wird. Hierbei ist dargestellt, dass die Ablaufrinnen 36 geneigt sind. Durch die Neigung wird das in der Ablaufrinne 36 befindliche Wasser entweder zu einem ersten Ende oder einem weiteren Ende der Ablaufrinne 36 geführt, wobei an jedem der Enden Durchgangsöffnungen 37 angeordnet sind, durch die das Wasser aus der Ablaufrinne 36 ausströmt. Weiter dargestellt ist, dass an der äußeren Mantelfläche des becherförmigen Abschnitts 27 des Halterelements 26 Nocken 38 angeordnet sind, die das Haltern der Vorrichtung 10 in der Brühgruppe 1 ermöglichen. Insbesondere wechselwirken die Nocken 38 mit Führungsnuten der Brühgruppe 1, die Teil der Bajonettverschlusseinrichtung der Brühgruppe 1 sind. Hierbei ist dargestellt, dass in einem Bereich unterhalb der Nocken 38 keine Ablaufrinne 36 angeordnet ist. Insbesondere erstrecken sich die Ablaufrinnen 36 entlang des Umfanges des becherförmigen Abschnitts 27 nur in den Abschnitten, über denen keine Nocke 38 angeordnet ist. Weiter dargestellt ist ein Griff 39 des Halterelements 26, der der manuellen Betätigung der Vorrichtung 10 dient.

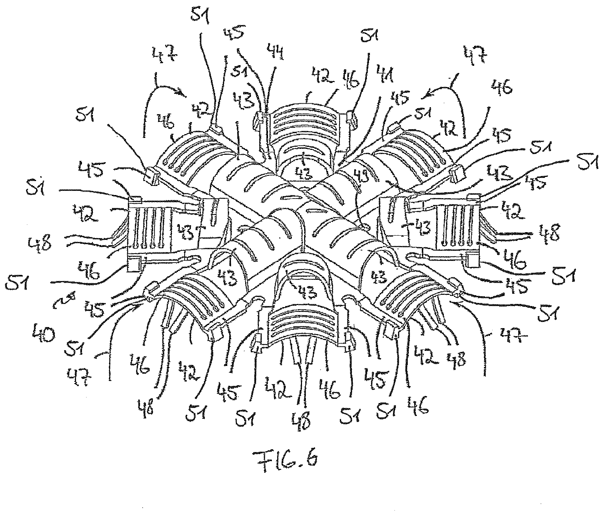

Fig. 6 zeigt eine perspektivische Ansicht eines Einsatzelements 40 in einem entfalteten Zustand. Das Einsatzelement 40 umfasst einen Bodenteil 41 und acht Mantelteile 42 des Einsatzelements 40. Hierbei ist dargestellt, dass das Bodenteil 41 des Einsatzelements 40 einen kreisförmigen Rand aufweist. Weiter weist das Bodenteil 41 bogenförmig ausgebildete geschlitzte Platten 43 auf bzw. bildet diese aus. Die bogenförmigen Platten 43 sind hierbei derart gebogen, dass sie nach oben von einer Bodenfläche 44 des Bodenteils 41 abstehen. Zwischen den Schlitzen der bogenförmigen Platten 43 sind Stege ausgebildet, die die an der Bodenfläche 14 (siehe Fig. 2), angeordneten Borstenelemente 15 ausbilden.

In Fig. 6 ist dargestellt, dass die Schlitze geneigt zu einer Ebene verlaufen, wobei diese Ebene senkrecht zu einer zentralen Mittelachse der jeweiligen bogenförmigen Platte orientiert ist. Neigungswinkel können hierbei in einem Bereich von (ausschließlich) 0° bis 45° (einschließlich) liegen. Die Mantelteile 42 stehen in Radialrichtung von dem Bodenteil 41 des Einsatzelementes 40 ab, wobei die Radialrichtung von einer Mittelachse des Bodenteils 41 nach außen orientiert ist. Die Mantelteile 42 umfassen jeweils zwei Randstege 45, wobei zwischen den Randstegen 45 eine weitere bogenförmige geschlitzte Platte 46 angeordnet ist. Zwischen den Schlitzen dieser Platte 46 sind wiederum Stege ausgebildet, die im becherförmigen Zustand des Einsatzelements 40 weitere Borstenelemente 17 ausbilden, die an einer inneren Mantelfläche 16 angeordnet sind (siehe Fig. 2). Auch diese Schlitze können geneigt gegenüber einer Ebene sein, die senkrecht zu einer zentralen Mittelachse der bogenförmigen geschlitzten Platte 46 orientiert ist. Weiter dargestellt ist, dass die Mantelteile 42 verschwenkbar an dem Bodenteil 44 des Einsatzelements 40 befestigt sind. Durch Pfeile 47 ist angedeutet, dass Mantelteile derart verschwenkt werden können, dass das Einsatzelement von dem in Fig. 6 dargestellten entfalteten Zustand in einen becherförmigen Zustand versetzt wird, wobei der becherförmige Zustand z.B. in Fig. 7 dargestellt ist. Weiter dargestellt ist, dass in Radialrichtung an äußeren Stirnseiten der bogenförmigen geschlitzten Platten 46 der Mantelteile 42 weitere Stege 48 mit einem freien Ende angeordnet sind, die im becherförmigen Zustand des Einsatzelements 40 weitere Borstenelemente 18 ausbilden, die an einer oberen Stirnseite des fächerförmigen Elements 11 (siehe Fig. 2) angeordnet sind.

In Fig. 7 ist eine Explosionsansicht einer erfindungsgemäßen Vorrichtung 10 mit einem Halterelement 26 und einem Einsatzelement 40 im becherförmigen Zustand dargestellt. Weiter ist durch Pfeile 54 dargestellt, dass das Einsatzelement 40 im becherförmigen Zustand in einem Innenvolumen des becherförmigen Abschnitts 27 des Halterelements 26 angeordnet wird. Hierbei wird auch die mechanische Verbindung zwischen dem Einsatzelement 40 und dem Halterelement 26 hergestellt. Weiter dargestellt sind Nut-Borstenelemente 18.

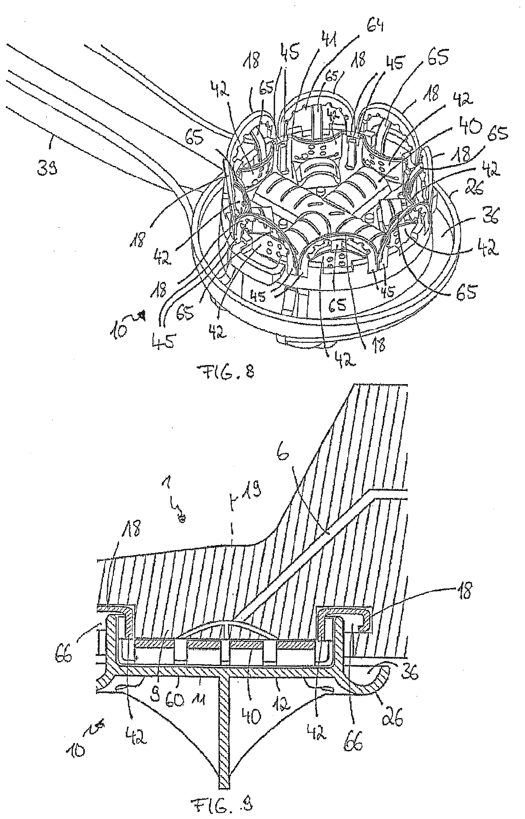

In Fig. 8 ist eine perspektivische Ansicht einer erfindungsgemäßen Vorrichtung 10 in einer weiteren Ausführungsform dargestellt. In dieser Ausführungsform umfasst die Vorrichtung 10, wie vorhergehend erläutert, ein Halterelement 26 und ein Einsatzelement 40. In Bezug auf das in Fig. 8 dargestellte Halterelement 26 wird auf die Ausführungen zu den Fig. 7 verwiesen.

Zu der Ausbildung des Einsatzelements 40 wird auf die Ausführungen zu Fig. 5 und Fig. 6 verwiesen, wobei das Einsatzelement 40 in diesen Ausführungsformen keine bogenförmige Nut-Borstenelemente 18 aufweist.

Im Unterschied zu den in diesen Figuren dargestellten Ausführungsformen umfasst das in Fig. 8 dargestellte Einsatzelement 40 also bogenförmige Nut-Borstenelemente 18 oder bildet diese aus. Hierbei ist dargestellt, dass ein Nut-Borstenelement 18 von einer Stirnseite eines Mantelteils 42 des Einsatzelementes 40 absteht. Hierbei kann das Einsatzelement 40 mit den Nut-Borstenelementen 18 als integrales Bauteil, insbesondere als Spritzgussteil, ausgebildet sein.

Ein erstes Bogenende des bogenförmigen Nut-Borstenelements 18 ist an einem Randsteg 45 oder an einem Teil eines Verbindungszapfens 51 (siehe Fig. 6) eines Mantelteils 42 des Einsatzelements 40 befestigt. Das weitere Bogenende des bogenförmigen Nut-Borstenelements 18 ist hierbei an einem weiteren Randsteg 45 bzw. an einem Teil eines Verbindungszapfens 51 dieses Mantelteils 42 befestigt.

Weiter ist ersichtlich, dass die bogenförmigen Nut-Borstenelemente 18 einen in Radialrichtung nach außen gekrümmten oder abgeknickten äußeren Bogenrandabschnitt aufweisen oder ausbilden. An einem inneren Bogenrand sind Ausnehmungen 64 angeordnet, wobei der Übersichtlichkeit halber nur eine Ausnehmung 64 mit einem Bezugszeichen versehen ist.

Weiter dargestellt ist, dass ein zentraler Abschnitt eines bogenförmigen Nut-Borstenelements 18 über einen Mittelsteg 65 mit äußeren Stirnseiten der Mantelteile 42 des Einsatzelements 40 verbunden ist. Hierbei bildet das Einsatzelement 40, insbesondere also auch die Mantelteile 42, das Borstenträgerelement 60.

Die Mittelstege 65 sind hierbei in Bezug auf eine zentrale Längsachse des Einsatzelements 40 im becherförmigen Zustand nach innen gekrümmt. Somit weisen die Mittelstege 65 eine konkave Krümmung auf oder bilden diese aus.

Fig. 9 zeigt einen schematischen Querschnitt durch eine Brühgruppe 1, die in ähnlicher Ausführungsform in Fig. 2 dargestellt ist. Hierbei ist dargestellt, dass die Vorrichtung 10, insbesondere ein als becherförmiges Element 11 ausgebildetes Borstenträgerelement 60, von unten in die Brühgruppe 1 eingesetzt ist. Weiter dargestellt ist eine Siebträgernut 66 der Brühgruppe 1. Weiter dargestellt ist, dass im eingesetzten Zustand Mantelteile 42 eines Einsatzelements 40 der Vorrichtung 1 an einer Außenwand der Dusche 9 der Brühgruppe 1 anliegen.

Aufgrund der Nut-Borstenelemente 18, insbesondere aufgrund deren Anordnung und Ausbildung, tritt beim Einsetzen der Vorrichtung 10 in die Brühgruppe 1 von unten ein oberer und in Radialrichtung nach außen gekrümmter oder abgeknickter Randabschnitt eines Nut-Borstenelements 18 in mechanischen Kontakt mit einer oberen Grenzwand der Siebträgernut 66. Beim weiteren Einsetzen gleitet das Nut-Borstenelement entlang dieser oberen Grenzwand in Radialrichtung (bezogen auf die zentrale Symmetrieachse 19 des Einsatzelements 40 im becherförmigen Zustand) nach außen. Diese Bewegung wird durch die erläuterte Krümmung oder Knickung sowie aufgrund des konkav gekrümmten Mittelstegs 65 bedingt oder zumindest unterstützt. Beim weiteren Einführen, also bei einer weiteren Bewegung des Borstenträgerelements 60 nach oben, erreicht der obere Randabschnitt eine in Radialrichtung äußere Grenzwand der Siebträgernut 66 und gleitet, wie vorhergehend erläutert, beim weiteren Einführen an dieser nach unten. Weiter erreicht der obere Randabschnitt beim weiteren Einsetzen eine untere Grenzwand der Siebträgernut 66 und gleitet an dieser entlang der Radialrichtung nach innen. Somit ist ersichtlich, dass sich das Nut-Borstenelement 18 in Radialrichtung nach außen einwickelt.

Ist die Vorrichtung 10 vollständig in die Brühgruppe 1 eingesetzt, so kann an allen Grenzwänden der Siebträgernut das Nut-Borstenelement 18 oder ein Mantelteil 42 anliegen. Wird die Vorrichtung 1, beispielsweise durch Betätigung eines Griffs 39, um deren zentrale Symmetrieachse 19 rotiert, so streicht das Nut-Borstenelement 18 und das Mantelteil 42 entlang der Grenzwände der Siebträgernut 66 und kann somit anhaftende Schmutzpartikel, insbesondere Kaffeereste, lösen.

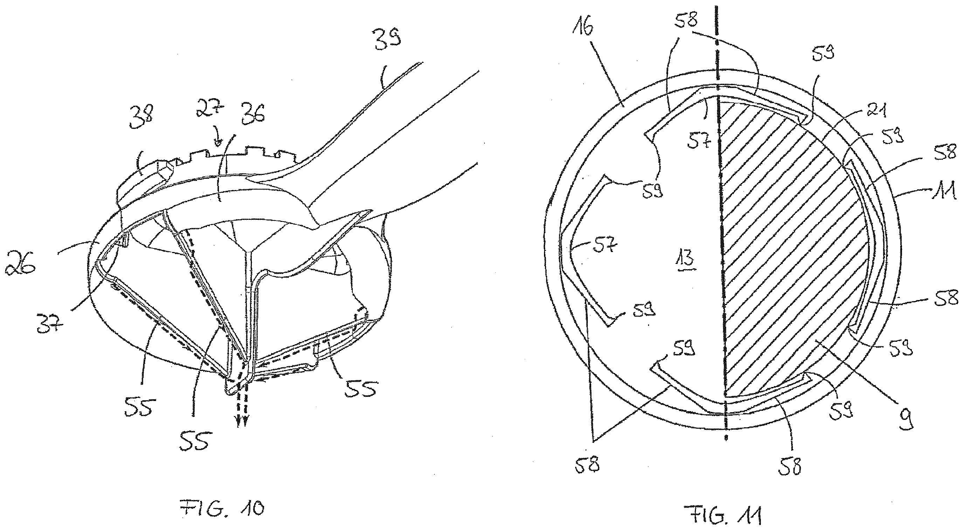

Fig. 10 zeigt eine perspektivische Ansicht eines Halterelements 26 einer weiteren erfindungsgemäßen Vorrichtung 10. An einer Unterseite des Halterelements 26 sind Führungsrippen 55 angeordnet. Diese Führungsrippen 55 dienen dem Führen des durch Öffnungen 37 aus den Ablaufrinnen 36 ausströmenden Wassers. Aufgrund von Adhäsionskräften wird das austretende Wasser entlang einer Führungskante der Führungsrippen 55 strömen. Eine untere Führungskante der Führungsrippen verläuft hierbei von einer äußeren Mantelfläche des becherförmigen Abschnitts 27 des Halterelements 26 hin zu einer zentralen Längsachse dieses becherförmigen Abschnitts 27 und geneigt zu einer Ebene, die senkrecht zu dieser zentralen Längsachse orientiert ist. Durch die beschriebenen Adhäsionskräfte sowie die auf das Wasser wirkende Gravitationskraft wird dieses somit zu einem zentralen Abschnitt unterhalb des becherförmigen Abschnitts 27 geführt und kann von diesem abtropfen, insbesondere in einen Auffangbehälter oder eine Abflusseinrichtung einer Espressomaschine. Um die erfindungsgemäße Vorrichtung 10 einzusetzen, kann der Nutzer das Einsatzelement 40 in den becherförmigen Abschnitt 27 des Halterelements 26 einlegen oder einsetzen. Hierzu kann das Einsatzelement 40 im entfalteten Zustand über den becherförmigen Abschnitt 27 gelegt werden. Dann kann das Bodenteil 41 des Einsatzelements 40 derart ausgerichtet und hin zum Bodenteil des becherförmigen Abschnitts 27 gedrückt werden, dass die Durchgangsöffnungen 49 (siehe Fig. 6) über die halterelementseitigen Verbindungszapfen 31 gestreift werden. Bei diesem Einsetzen werden die Mantelteile 42 relativ zum Bodenteil 41 des Einsatzelements 40 verschwenkt und bilden, wie vorhergehend erläutert, dann den becherförmigen Zustand mit den Verbindungszapfen 34 aus. Diese Verbindungszapfen 34 werden in die Verbindungsaussparungen 32 des becherförmigen Abschnitts 27 eingeführt. Hierdurch wird das Einsatzelement 40 einerseits in den becherförmigen Zustand versetzt und andererseits an dem Halterelement 26 befestigt. Die Vorrichtung 10 ist nunmehr einsatzbereit. Ein Nutzer kann nun die Vorrichtung 10 betätigen, indem er den Griff 39 betätigt und die Vorrichtung 10, insbesondere das becherförmige Element 11 von unten wie einen Siebträger 4 in eine Brühgruppe 1 einer Espressomaschine einführt. Hierbei können die Nocken 38 des Halterelements 26 in eine Helixnut einer Bajonettverbindung an der Brühgruppe 1 eingehängt werden, sodass die Vorrichtung 10 ohne händische Unterstützung mit der Espressomaschine formschlüssig verbunden werden kann. In diesem Falle können die Führungsleisten 35 das fächerförmige Element 11 gegenüber einer Dusche 9 der Brühgruppe 1 zentrieren, wodurch ein Schiefstehen des becherförmigen Elements 11 in der Brühgruppe 1 verhindert wird. Insbesondere können sich die Führungsleisten 35 an äußere Mantelflächen der Dusche 9 anlegen. Hiernach kann der Nutzer eine Wasserpumpe der Espressomaschine einschalten und die Vorrichtung durch Betätigung des Griffes 39 um deren zentrale Symmetrieachse rotieren, insbesondere alternierend rotieren, weiter insbesondere um etwa 30° alternierend rotieren. Hierbei reiben die von dem Einsatzelement 40 ausgebildeten Borstenelemente 15, 17, 18 über die zu reinigende Fläche der Brühgruppe 1, sodass sich dort anhaftende Kaffeereste 7 lösen und fortgeschwemmt werden.

Der Nutzer kann den Erfolg des Reinigungsprozesses kontrollieren, indem er das ablaufende Schmutzwasser beobachtet. Nach einer anfänglichen Phase mit deutlich sichtbarer dunkler Einfärbung aufgrund der Kaffeereste 7 tritt das ablaufende Wasser nach ca. 20 s bis 30 s klar aus. Die Pumpe kann dann abgestellt werden. Der Reinigungsvorgang ist abgeschlossen und die Vorrichtung 10 kann durch eine entsprechende Verdrehung aus der Brühgruppe 1 herausgenommen werden.

Es ist jedoch auch möglich, ein Spülmittel, beispielsweise ein in Tablettenform bereitgestelltes Spülmittel, in das Innenvolumen 13 des becherförmigen Elements 11 einzulegen und das becherförmige Element 11, wie vorhergehend erläutert, in die Brühgruppe 1 einzusetzen. Hiernach kann die Wasserzufuhr gestartet werden, bis Wasser über den Rand des becherförmigen Elements 11 tritt. Hiernach kann die Wasserpumpe ausgestellt und die Mischung aus Wasser und Spülmittel für eine vorbestimmte Zeitdauer stehengelassen werden. Durch Diffusion kann sich das Spülmittel bis in die Dusche 9 der Brühgruppe 1 verteilen und dort Fette, z.B. Kaffeefette und -öle lösen. Diese lagern sich insbesondere auf einer Innenseite der Dusche 9 und teilweise in den Wasserzufuhrkanälen 6 ab und sind somit für die Borstenelemente 15, 17, 18 nicht erreichbar. Die Vorrichtung 10 ermöglicht bei einer solchen Reinigung in vorteilhafter Weise, dass das gelöste Spülmittel nicht aufgrund eines Überdruckes zu weit in die Wasserzufuhrkanäle 6 und Wasserabfuhrkanäle der Espressomaschine sowie in entsprechende Ventile der Brühgruppe 1 gelangt. Dort kann das Spülmittel nämlich Schmierfette lösen, die für einen reibungs- und verschleißarmen Betrieb notwendig sein können. Aufgrund der Aussparungen 33 der Vorrichtung 10 kann sich beim Einströmen des Wassers in das Innenvolumen 13 des becherförmigen Elements 11 kein Überdruck aufbauen, sodass das genannte Problem vermieden wird.

Fig. 11 zeigt einen Querschnitt durch ein becherförmiges Element 11 in einer weiteren Ausführungsform. In dieser Ausführungsform sind Borstenelemente 15, die an der inneren Mantelfläche des becherförmigen Elements 11 angeordnet sind, als Abstreifer-Elemente 57 ausgebildet. Ein Abstreifer-Element 57 weist hierbei zwei Schenkel 58 auf, die sich jeweils schräg zur Radialrichtung in das Innenvolumen 13 des becherförmigen Elements 11 hinein erstrecken. An freien Enden weisen die Schenkel 58 jeweils eine Abstreifnase 59 auf. Diese kann z.B. durch eine Verdickung der Schenkel 58 hin zum freien Ende ausgebildet werden, wobei die Verdickung derart ausgebildet ist, dass eine Spitze der Abstreifnase eine Mantelfläche 21 einer im Innenvolumen 13 angeordneten Dusche 9 einer Brühgruppe 1 kontaktieren kann. Die Abstreifer-Elemente 57, insbesondere die Schenkel 58, können elastisch ausgebildet sein. Kontaktiert die Spitze der Abstreifnase 59 eine Mantelfläche 21 einer im Innenvolumen 13 angeordneten Dusche 9, so können die Schenkel 58 aufgrund einer Federkraft, die durch die Verbiegung der Schenkel 58 erzeugt wird, gegen die Mantelfläche 21 gedrückt werden. Bei Rotation des becherförmigen Elements 11 streifen die Abstreifnasen 59 der Schenkel 58 entlang der Mantelfläche und können so Kaffeereste 7 (siehe Fig. 1) ablösen.

In Fig. 11 zeigt die linke Hälfte den Querschnitt ohne im Innenvolumen 13 angeordnete Dusche 9, während die rechte Hälfte einen Querschnitt mit im Innenvolumen 13 angeordneter Dusche 9 zeigt. In Fig. 15 ist nicht dargestellt, das Abstreifer-Elemente 57 auch auf der Bodenfläche 14 des becherförmigen Elements 11 (siehe Fig. 2) angeordnet sein können.

## Patentansprüche

1. Vorrichtung zur Reinigung von Espressomaschinen, **dadurch gekennzeichnet, dass** die Vorrichtung (10) mindestens ein ring- oder hohlzylinderförmiges Borstenträgerelement umfasst, wobei an einer Stirnfläche oder Mantelfläche des Borstenträgerelements mindestens ein Nut-Borstenelement (18) zur Reinigung einer Siebträgernut (66) angeordnet ist, wobei das mindestens eine Nut-Borstenelement (18) von der Stirnfläche oder Mantelfläche absteht, wobei zumindest ein Teilabschnitt des mindestens einen Nut-Borstenelements (18) in Radialrichtung absteht und/oder zumindest ein Teilabschnitt des Nut-Borstenelements (18) konkav gekrümmt ist und/oder dass mindestens ein Borstenelement (17) an einer inneren Mantelfläche des ring- oder hohlzylinderförmigen Borstenträgerelements angeordnet ist.

2. Vorrichtung nach Anspruch 1, **dadurch gekennzeichnet, dass** eine Breite des mindestens einen Nut-Borstenelements (18) entlang einer Umfangsrichtung größer als 50 % einer Höhe des Nut-Borstenelements (18) ist.

3. Vorrichtung nach einem der vorangegangenen Ansprüche, **dadurch gekennzeichnet, dass** das mindestens eine Nut-Borstenelement (18) bogenförmig ausgebildet ist und insbesondere mit der Stirnfläche des Borstenträgerelements verbunden ist.

4. Vorrichtung nach einem der vorangegangenen Ansprüche, **dadurch gekennzeichnet, dass** das Borstenträgerelement als becherförmiges Element ausgebildet ist, wobei auf einer Bodenfläche (14) des becherförmigen Elements (11) mindestens ein Borstenelement (15) zur Reinigung einer unteren Stirnseite einer Dusche angeordnet ist.

5. Vorrichtung nach Anspruch 4, **dadurch gekennzeichnet, dass** an einer Stirnseite des becherförmigen Elements (11) mindestens ein weiteres Borstenelement (18) zur Reinigung einer Dichtung der Brühgruppe angeordnet ist.

6. Vorrichtung nach einem der vorangegangenen Ansprüche, **dadurch gekennzeichnet, dass** ein Borstenelement (15, 15b, 17) bogenförmig ausgebildet ist, wobei sowohl ein erstes Ende des Borstenelements (15, 15b, 17) als auch ein weiteres Ende des Borstenelements (15b) mit der inneren Mantelfläche oder mit der Bodenfläche (14) verbunden ist.

7. Vorrichtung nach einem der vorangegangenen Ansprüche, **dadurch gekennzeichnet, dass** das Borstenträgerelement (60) oder das becherförmige Element (11) von mindestens einem Einsatzelement (40) und mindestens einem Halterelement (26) ausgebildet wird, wobei das Einsatzelement (40) mindestens ein Nut-Borstenelement (18) und/oder ein Borstenelement (15, 17) aufweist oder ausbildet, wobei das Einsatzelement (40) in, auf oder an dem Halterelement (26) anordenbar ist.

8. Vorrichtung nach Anspruch 7, **dadurch gekennzeichnet, dass** das Einsatzelement (40) mindestens einen Bodenteil (41) und mindestens einen Mantelteil (42) umfasst, wobei der mindestens eine Mantelteil (42) mindestens ein Borstenelement (17) der inneren Mantelfläche und/oder der mindestens eine Mantelteil (42) das mindestens eine Nut-Borstenelement (18) aufweist oder ausbildet.

9. Vorrichtung nach Anspruch 8, **dadurch gekennzeichnet, dass** das Bodenteil (41) und/oder das Mantelteil (42) mindestens ein Verbindungsmittel zur mechanischen Verbindung des Einsatzelements (40) mit dem Halterelement (26) aufweist oder ausbildet.

10. Vorrichtung nach Anspruch 9, **dadurch gekennzeichnet, dass** das Einsatzelement (40) mindestens zwei Mantelteile (42) umfasst, wobei Randabschnitte der Mantelteile (42) derart ausgebildet sind, dass in einem becherförmigen Zustand des Einsatzelements (40) mindestens ein einsatzelementseitiger Verbindungszapfen (34) zur Anordnung in einer halterelementseitigen Aussparung (32) und/oder mindestens eine einsatzelementseitige Aussparung zur Aufnahme eines halterelementseitigen Verbindungszapfens ausgebildet wird.

11. Vorrichtung nach einem der Ansprüche 1 bis 10, **dadurch gekennzeichnet, dass** die Vorrichtung (10) mindestens ein Befestigungsmittel zur Befestigung der Vorrichtung an oder in der Brühgruppe der Espressomaschine umfasst.

12. Vorrichtung nach einem der vorangegangenen Ansprüche, **dadurch gekennzeichnet, dass** die Vorrichtung (10) mindestens ein Führungsmittel zur Führung des aus einem Innenvolumen (13) des becherfömigen Elements ausströmenden Wassers aufweist oder ausbildet.

13. Vorrichtung nach Anspruch 12, **dadurch gekennzeichnet, dass** das becherförmige Element (11) an einer äußeren Mantelfläche (21) mindestens eine Ablaufrinne (36) aufweist oder ausbildet.

14. Vorrichtung nach einem der Ansprüche 12 bis 13, **dadurch gekennzeichnet, dass** die Vorrichtung (10) mindestens ein trichterförmiges Element umfasst oder ausbildet oder dass die Vorrichtung (10) mindestens eine Führungsrippe (55) umfasst oder ausbildet.

15. Verfahren zur Reinigung einer Espressomaschine, wobei eine Vorrichtung (10) gemäß einem der Ansprüche 1 bis 14 in eine Brühgruppe der Espressomaschine eingesetzt wird, wobei die Vorrichtung (10) aus einer Ausgangsstellung um eine zentrale Längsachse eines Borstenträgerelements (60) der Vorrichtung (10) rotiert wird.

## Claims

1. Apparatus for cleaning espresso machines, wherein the apparatus (10) comprises at least one annular or hollow-cylindrical bristle-carrier element, wherein at least one groove-bristle element (18) for cleaning a portafilter groove (66) is arranged on an end surface or lateral surface of the bristle-carrier element, wherein the at least one groove-bristle element (18) projects from the end surface or lateral surface, **characterized in that** at least one portion of the at least one groove-bristle element (18) projects in the radial direction and/or at least one portion of the groove-bristle element (18) is curved concavely, and/or **in that** at least one bristle element (17) is arranged on an inner lateral surface of the annular or hollow-cylindrical bristle-carrier element.

2. Apparatus according to Claim 1, **characterized in that** a width of the at least one groove-bristle element (18) along a circumferential direction is greater than 50% of a height of the groove-bristle element (18).

3. Apparatus according to either of the preceding claims, **characterized in that** the at least one groove-bristle element (18) is of arcuate design and is connected, in particular, to the end surface of the bristle-carrier element.

4. Apparatus according to one of the preceding claims, **characterized in that** the bristle-carrier element is designed as a cup-form element, wherein at least one bristle element (15) for cleaning a lower end side of a spray fitting is arranged on a base surface (14) of the cup-form element (11).

5. Apparatus according to Claim 4, **characterized in that** at least one further bristle element (18) for cleaning a seal of the brewing unit is arranged on an end side of the cup-form element (11).

6. Apparatus according to one of the preceding claims, **characterized in that** a bristle element (15, 15b, 17) is of arcuate design, wherein both a first end of the bristle element (15, 15b, 17) and a further end of the bristle element (15b) are connected to the inner lateral surface or to the base surface (14).

7. Apparatus according to one of the preceding claims, **characterized in that** the bristle-carrier element (60) or the cup-form element (11) are formed by at least one insert element (40) and at least one holder element (26), wherein the insert element (40) has, or forms, at least one groove-bristle element (18) and/or a bristle element (15, 17), wherein the insert element (40) can be arranged in or on the holder element (26).

8. Apparatus according to Claim 7, **characterized in that** the insert element (40) comprises at least one base part (41) and at least one lateral-surface part (42), wherein the at least one lateral-surface part (42) has, or forms, at least one bristle element (17) of the inner lateral surface and/or the at least one lateral-surface part (42) has, or forms, the at least one groove-bristle element (18).

9. Apparatus according to Claim 8, **characterized in that** the base part (41) and/or the lateral-surface part (42) have/has, or form/forms, at least one connecting means for the mechanical connection of the insert element (40) to the holder element (26) .

10. Apparatus according to Claim 9, **characterized in that** the insert element (40) comprises at least two lateral-surface parts (42), wherein peripheral portions of the lateral-surface parts (42) are designed such that, with the insert element (40) in a cup-form state, at least one connecting stub (34), which is provided on the insert element, is designed to be arranged in an aperture (32), which is provided on the holder element, and/or at least one aperture, which is provided on the insert element, is designed to accommodate a connecting stub, which is provided on the holder element.

11. Apparatus according to one of Claims 1 to 10, **characterized in that** the apparatus (10) comprises at least one fastening means for fastening the apparatus on or in the brewing unit of the espresso machine.

12. Apparatus according to one of the preceding claims, **characterized in that** the apparatus (10) has, or forms, at least one guide means for guiding the water which flows out of an inner volume (13) of the cup-form element.

13. Apparatus according to Claim 12, **characterized in that** the cup-form element (11) has, or forms, at least one drainage channel (36) on an outer lateral surface (21).

14. Apparatus according to either of Claims 12 and 13, **characterized in that** the apparatus (10) comprises, or forms, at least one funnel-shaped element, or **in that** the apparatus (10) comprises, or forms, at least one guide rib (55).

15. Method for cleaning an espresso machine, wherein an apparatus (10) according to one of Claims 1 to 14 is inserted into a brewing unit of the espresso machine, and wherein the apparatus (10) is rotated out of its starting position about a central longitudinal axis of the bristle-carrier element (60) of the apparatus (10).

## Revendications

1. Dispositif de nettoyage de machines à expresso, dans lequel le dispositif (10) comprend au moins un élément porte-brosse annulaire ou cylindrique creux, dans lequel au moins un élément de brosse de rainure (18) est disposé sur une face frontale ou une face latérale de l'élément porte-brosse pour le nettoyage d'une rainure porte-filtre (66), dans lequel ledit au moins un élément de brosse de rainure (18) est saillant sur la face frontale ou la face latérale, **caractérisé en ce qu'**au moins une région partielle dudit au moins un élément de brosse de rainure (18) est saillant en direction radiale et/ou au moins une région partielle de l'élément de brosse de rainure (18) présente une courbure concave et/ou **en ce qu'**au moins un élément de brosse (17) est disposé sur une face latérale interne de l'élément porte-brosse annulaire ou cylindrique creux.

2. Dispositif selon la revendication 1, **caractérisé en ce qu'**une largeur dudit au moins un élément de brosse de rainure (18) dans une direction périphérique est supérieure à 50 % d'une hauteur de l'élément de brosse de rainure (18).

3. Dispositif selon l'une quelconque des revendications précédentes, **caractérisé en ce que** ledit au moins un élément de brosse de rainure (18) est réalisé en forme d'arc et est en particulier relié à la face frontale de l'élément porte-brosse.

4. Dispositif selon l'une quelconque des revendications précédentes, **caractérisé en ce que** l'élément porte-brosse est constitué par un élément en forme de coupe, dans lequel au moins un élément de brosse (15) est disposé sur une face de fond (14) de l'élément en forme de coupe (11) pour le nettoyage d'un côté frontal inférieur d'une douche.

5. Dispositif selon la revendication 4, **caractérisé en ce qu'**au moins un autre élément de brosse (18) est disposé sur un côté frontal de l'élément en forme de coupe (11) pour le nettoyage d'un joint d'étanchéité du groupe de percolateur.

6. Dispositif selon l'une quelconque des revendications précédentes, **caractérisé en ce qu'**un élément de brosse (15, 15b, 17) est réalisé en forme d'arc, dans lequel aussi bien une première extrémité de l'élément de brosse (15, 15b, 17) qu'une autre extrémité de l'élément de brosse (15b) est reliée à la face latérale interne ou à la face de fond (14).

7. Dispositif selon l'une quelconque des revendications précédentes, **caractérisé en ce que** l'élément porte-brosse (60) ou l'élément en forme de coupe (11) est formé d'au moins un élément d'insertion (40) et d'au moins un élément de support (26), dans lequel l'élément d'insertion (40) présente ou forme au moins un élément de brosse de rainure (18) et/ou un élément de brosse (15, 17), dans lequel l'élément d'insertion (40) peut être disposé dans, sur ou à l'élément de support (26) .

8. Dispositif selon la revendication 7, **caractérisé en ce que** l'élément d'insertion (40) comprend au moins une partie de fond (41) et au moins une partie d'enveloppe (42), dans lequel ladite au moins une partie d'enveloppe (42) présente ou forme au moins un élément de brosse (17) de la face latérale interne et/ou ladite au moins une partie d'enveloppe (42) présente ou forme ledit au moins un élément de brosse de rainure (18).

9. Dispositif selon la revendication 8, **caractérisé en ce que** la partie de fond (41) et/ou la partie d'enveloppe (42) présente ou forme au moins un moyen de liaison pour la liaison mécanique de l'élément d'insertion (40) avec l'élément de support (26).

10. Dispositif selon la revendication 9, **caractérisé en ce que** l'élément d'insertion (40) comprend au moins deux parties d'enveloppe (42), dans lequel des régions de bord des parties d'enveloppe (42) sont configurées de telle manière que dans un état en forme de coupe de l'élément d'insertion (40) au moins un tourillon de liaison côté élément d'insertion (34) soit formé en vue de son agencement dans une découpe côté élément de support (32) et/ou qu'au moins une découpe côté élément d'insertion soit formée en vue de recevoir un tourillon de liaison côté élément de support.

11. Dispositif selon l'une quelconque des revendications 1 à 10, **caractérisé en ce que** le dispositif (10) comprend au moins un moyen de fixation pour la fixation du dispositif sur ou dans le groupe de percolateur de la machine à expresso.

12. Dispositif selon l'une quelconque des revendications précédentes, **caractérisé en ce que** le dispositif (10) présente ou forme au moins un moyen de guidage pour le guidage de l'eau s'écoulant hors d'un volume intérieur (13) de l'élément en forme de coupe.

13. Dispositif selon la revendication 12, **caractérisé en ce que** l'élément en forme de coupe (11) présente ou forme au moins une rigole d'évacuation (36) sur une face latérale extérieure (21).

14. Dispositif selon une des revendications 12 et 13, **caractérisé en ce que** le dispositif (10) comprend ou forme au moins un élément en forme d'entonnoir ou **en ce que** le dispositif (10) comprend ou forme au moins une nervure de guidage (55).

15. Procédé de nettoyage d'une machine à expresso, dans lequel on utilise un dispositif (10) selon l'une quelconque des revendications 1 à 14 dans un groupe de percolateur de la machine à expresso, dans lequel on fait tourner le dispositif (10) à partir d'une position initiale autour d'un axe longitudinal central d'un élément porte-brosse (60) du dispositif (10).
